# EUROPEAN PATENT SPECIFICATION

(11) **EP 1 180 886 B1**
(45) Date of publication and mention of the grant of the patent: **11.10.2006**
(21) Application number: 00117722.9
(22) Date of filing: 17.08.2000
(51) Int. Cl.: H04L 29/06

(54) **Load balancing method and system**
Verfahren und System zum Lastausgleich
Procédé et système d'équilibrage de charge

(43) Date of publication of application: 20.02.2002
(73) Proprietor: SUN MICROSYSTEMS, INC., Palo Alto, California 94303 (US)
(72) Inventor: Hütsch, Matthias, 22111 Hamburg (DE); Meyer, Markus, 21423 Winsen (DE); Herzog, Markus, 20357 Hamburg (DE); Braun, Oliver, 21031 Hamburg (DE)
(74) Representative: HOFFMANN EITLE

(56) References cited:
- US-A- 5 774 660
- HUNT G D H ET AL: "Network Dispatcher: a connection router for scalable Internet services" COMPUTER NETWORKS AND ISDN SYSTEMS,NORTH HOLLAND PUBLISHING. AMSTERDAM,NL, vol. 30, no. 1-7, 1 April 1998 (1998-04-01), pages 347-357, XP004121412 ISSN: 0169-7552

## Description

### Field of the Invention

The invention relates to a method and system for balancing a processing load in a network.

### Background of the Invention

In today's computerized world an increasing number of tasks is solved using networks of computers. In these cases a user operating a computer connected to a network of computers such as the Internet, is able to access data stored on an arbitrary computer also connected to the network.

A user may for example retrieve information from another computer located at an arbitrary location and connected to the network, for manipulation, or may retrieve an application program for execution on his computer. The user may also wish to send data stored on his computer to some location in the network for manipulation or storage of the information.

In a scenario where a large number of computers is connected in a network it is conceivable that applications for storing, generating, processing and manipulating data, visualization or similar are not locally executed on a client data processing device, but are executed on another computer somewhere connected to the network, wherein the execution of the application may be controlled through the client computer.

For example, in Internet mail applications a user may access his mailbox through a client computer by logging on to a server hosting the user mailbox. After logging on to the server the user can browse through mail, store and manipulate e-mail messages or send e-mail messages. In this case the user computer generates instructions and transmits same to the server which thereupon performs the desired operation. Thus, the mail application is executed at the server, while instructions controlling the application are generated at the client computer and screen contents are transmitted to the client computer for local display.

In general any application may be executed in the described way, i.e. remote from a client computer on a server computer. A server computer usually is a data processing device having large capacity for serving a number of client requests regarding the execution of applications for the users.

However, in case a large number of users, i.e. client computers, wishes to remotely run an application on a server, a capacity for serving client requests of a server could become insufficient leading to poor performance and high latency for users.

Therefore, it is conceivable to provide a plurality of servers for remote execution of applications on behalf of client computers. In this case, however, there exists the problem that client requests from a plurality of clients requesting service including execution of applications need to be evenly distributed over the available servers in order to avoid bottlenecks at overloaded servers.

Requests from clients could be evenly distributed over a given number of servers for distributing a processing load, however, this may not lead to satisfactory results.

US 5,774,660 describes a WWW server for resource-based load balancing in a distributed resource multi-node network. A load balancer receives all requests from clients using a browser. The requests include a URL specifying the requested resource. After the location of the requested resource is known, the load balancer passes a connection to the client and the URL request from the load balancer to a node having the requested resource. During this process the initial connection packet sequence is transmitted to the node by modifying the address to that for the node. Further, network software is modified to generate the physical network address of the node, but then changes the destination address back to the virtual address. Accordingly, the node having the resource transmits the requested resource directly to the client, circumventing the load balancer.

Hunt G.D.H. et al.: "Network Dispatcher: a connection router for scalable Internet services" Computer Networks and ISDN Systems, North Holland Publishing, Amsterdam, NL, vol. 30, no. 1-7, 1 April 1998, pages 347-357, XP004121412 describes a connection router for scalable Internet services. A scalable web server is shown with a set of network dispatchers routing requests from multiple clients to a set of server nodes. The multiple network dispatchers may be configured for high availability and non-disruptive service.

### Summary of the Invention

It is therefore an object of the invention to provide a method and system for improved balancing of processing load in a network.

The object of the invention is solved by the subject matter of the independent claims. Advantageous features of the invention are disclosed in dependent claims.

A method for balancing a processing load in a network having a plurality of processing servers and a load balancer includes receiving a client request at the load balancer from a client, selecting at the load balancer one of the plurality of processing servers for serving the client request, establishing a communication link between the client and the selected processing server, and authorizing the selected processing server to serve the client request, e.g., by launching an application and receiving instructions from the client.

This provides an advantage that requests from, e.g. a large number of clients may be distributed over a number of processing server under control of the load balancer.

The load balancer may consist of a load balancing master and a plurality of load balancing slaves wherein the client request generated by the client may be received at a first load balancing slave. The first load balancing slave may thereupon generate a selection request message and transmit same from the first load balancing slave to the load balancing master. Upon receiving the selection request message from the load balancing slave the load balancing master may perform the selection step for selecting one of the plurality of processing servers and thereafter the communication link between the client and the selected processing server may be established through one of the load balancing slaves.

The selection of the processing server may be based on at least one of the group consisting of a client location, a processing server location, a client identity, a processing server load, and an application requested with a client request message.

The client request may include a request for execution of an application and the load balancing means may instruct the selected processing server to start the requested application. Further the selected processing server may return a process identifier of the started application to the load balancing means, and the load balancer may generate an instruction message including the process identifier for the client to contact the selected processing server using the process identifier.

At the load balancing master one of a plurality of the load balancing slaves may be selected for establishing the communication link between the client and the selected processing server, and the communication link may be established through the selected load balancing slave.

This provides the advantage that requests from a large number of clients may be distributed over a number of load balancing slaves and processing servers under control of the load balancing master.

The client may be instructed to redirect the client request to the selected load balancing slave, in case the first load balancing slave is not the selected load balancing slave.

Further, the load balancing master may generate a selection instruction message including identification information identifying the selected load balancing slave, transmit the selection instruction message to the first load balancing slave, establish the communication link between the client and the selected processing server through the first load balancing slave, in case the identification information identifies the first load balancing slave as selected load balancing slave, and generate a redirection message for redirecting the client request to the selected load balancing slave and transmitting the redirection message to the selected load balancing slave in case the identification information does not identify the first load balancing slave as selected load balancing slave.

The redirection message may be transmitted from the first load balancing slave to the client for instructing the client to transmit the client request to the selected load balancing slave.

The selected load balancing slave may transmit a further selection request message to the load balancing master, in case the client request was redirected.

The selection of the load balancing slave may be based on at least one of the group consisting of a client location, a load balancing slave location, a client identity, a processing load at a load balancing slave, and an application requested with a client request message.

The load balancer may authenticate a user at the client.

Each processing server and load balancing slave in regular intervals may report its processing load to the load balancing master.

Further features may be found in the claims.

### Brief Description of the Drawings

- Fig. 1: shows a block diagram illustrating a load balancing system according to an embodiment of the invention,
- Fig. 2: shows a flow diagram illustrating a flow of processing steps executed in accordance with an embodiment of the invention,
- Fig. 3: shows a block diagram illustrating a load balancing system according to an embodiment of the invention,
- Fig. 4: shows a flow diagram illustrating a sequence of steps performed in accordance with an embodiment of the method according to the invention,
- Fig. 5: shows a block diagram illustrating a load balancing system according to an embodiment of the invention,
- Fig. 6: shows a flow diagram illustrating steps executed in accordance with a method according to an embodiment of the invention,
- Fig. 7: shows a block diagram illustrating a load balancing system according to an embodiment of the invention,
- Fig. 8: shows a flow diagram illustrating steps executed in accordance with a method according to an embodiment of the invention,
- Fig. 9: illustrates a time sequence of steps performed according to an embodiment of the invention, and
- Fig. 10: illustrates a time sequence of steps performed in accordance with an embodiment of the invention.

### Detailed Description of the Preferred Embodiments

In the figures corresponding reference numerals denote corresponding features.

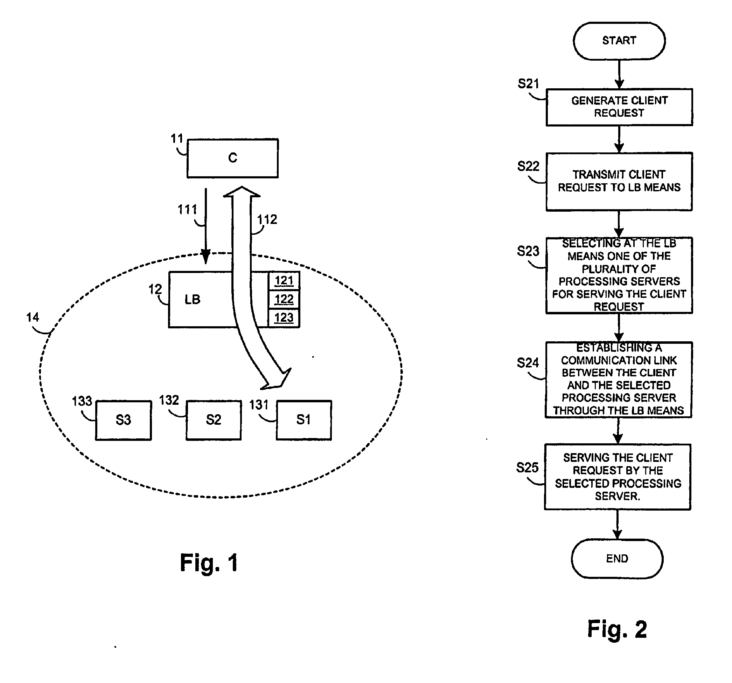

In the following an embodiment of the invention will be described with respect to Fig. 1. Fig. 1 shows a block diagram of a load balancer according to an embodiment of the invention.

Fig. 1 shows a client 11 and load balancing means 12 for balancing a processing load in a network, e.g. generated by requests from a plurality of clients such as the client 11. For simplicity reasons Fig. 1 illustrates only a single client 11, however, an arbitrary number of clients may be provided.

Furthermore, Fig. 1 shows three processing servers 131, 132 and 133, e.g. for serving client requests such as client requests generated by the client 11. For simplicity reasons only three processing servers are illustrated in Fig. 1, however, it is understood that an arbitrary number of processing servers may be provided.

The load balancing means 12, and the processing servers 131, 132 and 133 may be part of a local network 14 and the client 11 may be able to access the local area network 14 from the outside through a communication link, e.g. a communication link established through a public network such as the Internet, or any other network connection. The communication link between the client and the local area network 14 may also involve dedicated communication lines, such as a telephone line, ISDN or wireless communication links. However, it is also possible that all or some entities of the system shown in Fig. 1 are part of a wide area network or public network, and it is also possible that all or some entities shown in Fig. 1 are connected via a local area network such as local area network 14.

In operation, the load balancing means 12 distributes requests from the client 11 onto the processing servers 131, 132 and 133.

In the following the elements shown in Fig. 1 are described in more detail.

The client 11 may be a general purpose data processing device such as a home computer operated by a user who wishes to remotely execute an application in a network. The client may also be constituted by a mobile device such as a mobile computer, a mobile phone or a mobile data organizer having means for connecting to a computer network, e.g. through wireless communication links. Further, the client 11 is preferably equipped with software tools for enabling the client 11 to access a wide area network such as the Internet and/or the local area network 14. For example, access to a wide area network or the local area network 14 may be gained by connecting the client to a telephone line such as a dedicated line or wireless connection, and by dialing a telephone number of a network provider providing network services. A network provider may be an institution providing access for users to a network such as the Internet, for example the server which may be accessed by telephone connections and which itself is connected to further data processing devices of a network.

In operation the client will preferably generate client requests concerning the execution of applications and/or the retrieval or transmission of data to and from the available processing servers. Further, a client request generated by the client 11 may include a client identifier being for example a number string or character string uniquely identifying the client 11. Further, a client request may include information on the location of the client 11 in order to facilitate distributing client requests on servers.

In the following the load balancing means 12 will be described in further detail.

The load balancing means 12 may be constituted by a data processing device having large capacity, e.g., a server, in order to be able to handle a large number of client requests.

Preferably, the load balancer is provided with receiving means 121 for receiving client requests from the client 11.

The receiving means may be constituted by a data processing device connectable to the client 11, e.g. through a network and/or dedicated communication lines including wireless connections or may be realized by a program section executed at the load balancing means.

Further, the load balancing means may comprise selection means 122 for selecting at least one of the processing servers 131, 132 and 133. The selection means 122 preferably is connected to the receiving means 121 for obtaining the client request or selected information contained in the client request from the receiving means 121. The selection means may be a dedicated data processing unit or be constituted by a plurality of interconnected data processing units or may be realized by a program section executed at the load balancing means. Upon receiving a client request or information contained in a client request the selection means selects at least one of the processing servers 131, 132 and 133 for serving the request.

To select one of the processing servers the selection means preferably maintains a list of all available processing servers, in the case shown in Fig. 1 of the three processing servers 131, 132 and 133. Further, the selection means 122 may maintain information on locations of clients and the available processing servers and/or their relative processing load, e.g. a load generated by the serving of client requests. The individual processing server load may be reported from the processing servers from time to time or in regular time intervals to the selection means.

Further, the selection means may maintain information on a client request history comprising for example an identity of requesting clients, requested applications and further processing servers previously selected for serving of previous client requests for allowing a grouping of client requests from the same client to a particular processing server.

Upon receiving a request from a client at the load balancing means 12 the selection means 122 may select a processing server located close to the client. Further, a processing server can be selected such that requests from a client will be grouped onto one processing server, i.e., all requests from a particular client are served by a single processing server, if possible.

The selection may be performed as outlined with respect to Fig. 1. By using a relative processing server load in the selection step, processing load may be evenly distributed over the available processing servers.

The client location allows the selection of a processing server which is located close to the client 11, e.g. in the same country, or which may be easily accessed by the client 11. The client identity allows to direct client requests from client 11 to a processing server, which for example already serves a previous client request from client 11.

In using information on applications executed on processing servers for serving client requests for selecting a processing server, client requests from a particular client concerning the same application may be distributed to the same processing server.

In brief, the selection of the processing server may be based on at least one of the group consisting of
- a client location,
- a processing server location,
- a client identity,
- a processing server load, and
- an application requested with a client request message.

Further, the load balancing means 12 may comprise communication means allowing to establish a communication link between the client and the selected processing server through the load balancing means. In the shown example of Fig. 1 a communication link 112 is shown, established between client 11 and processing server 131.

However, it is also possible to establish a direct communication link between the client 11 and processing server 131, i.e. a communication link which does not include the load balancing means, in which case for example the client 11 could be instructed to contact the selected processing server in order to establish a communication link.

The communication means 123 may be constituted by a dedicated data processing device, preferably connected to the selection means for obtaining information on the selected processing server therefrom or by a code section executed at the load balancing means. Further, the communication means 123 preferably provides the required tools for contacting the selected processing server, e.g. means for generating a request for service to be transmitted to the selected processing server, e.g. through the local area network 14.

It is noted that it is also possible that the receiving means 121, the selection means 122 and the communication means 123 are constituted by code sections for execution on one or a plurality of data processing devices containing instructions for carrying out the processing steps in receiving client requests, selecting processing servers and establishing communication links between a client and a selected processing server.

The processing servers 131, 132 and 133 may be data processing devices having large capacity for serving large numbers of client requests, as for example data servers known in the art.

It is noted that a computer readable medium may be provided, having a program recorded thereon, where the program is to make a computer or system of data processing devices execute functions of the load balancing means. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

In the following a further embodiment of the invention will be described with respect to Fig. 2. Fig. 2 shows a sequence of processing steps executed according to an embodiment of the method according to the invention, involving the client 11, the load balancing means 12, and one of the processing servers 131, 132 and 133.

Even though the example of Fig. 2 will be described with respect to the client 11, e.g. illustrated in Fig. 1, it is understood that instead a request from any other client may be handled correspondingly.

In a step S21 the client 11 generates a client request. The client request preferably is a request for service and may contain a request for execution of an application. The application may for example be a word processing application, a spread sheet application, a mail application, a drawing application, scientific applications or similar. The client request may be generated at the client 11 by activating a request program, e.g. by clicking on an icon on the desktop of a display device at the client or by entering corresponding commands into a command line, or by any other means.

The client request may include a request for execution of an application and/or requested data and may optionally further include information on the client such as the client location and/or a client identifier.

In a step S22 the client request is transmitted from the client 11 to the load balancing means 12. The transmission may involve a network or dedicated communication links including wireless connections and may involve packet switched communication.

In a step S23 the load balancing means 12 selects one of a plurality of processing servers for serving the client request, e.g. one of the processing servers 131, 132 and 133 shown in Fig. 1.

After selecting an appropriate processing server, for example processing server 131 of Fig. 1, the load balancing means 12 in a step S24 establishes a communication link between the client 11 and the processing server 131 through the load balancing means, for example as illustrated by communication link 112 in Fig. 1. The communication link may be established via a network, dedicated communication links including wireless communication and similar. By establishing the communication link from the client 11 to the processing server 131 through the load balancing means 12 all communication from the client 11 regarding the request will be relayed through the load balancing means 12 to the processing server 131 and likewise all information transmitted from the processing server 131 to the client 11 will be relayed by the load balancing means 12.

However, it is also possible to establish a direct communication link between the client 11 and the selected processing server, i.e. a communication link which does not pass through the load balancing means.

Thereafter, in a step S25 the selected processing server, e.g. processing server 131 serves the client request. This may involve receiving instructions from client 11 and launching a corresponding application at the selected processing server and receiving instructions from the client for controlling the application. The client 11 may for example transmit instructions for starting an application at the selected processing server and interactively control the application through further instructions transmitted from the client to the processing server. For example, the application may be a text processor and the client may control via instructions to the processing server scrolling through the document, resulting in the transmission of corresponding frame contents for local display at the client. Further, the application could be a calculation program, for example in a scientific application, and the client could provide instructions regarding parameters of the calculation.

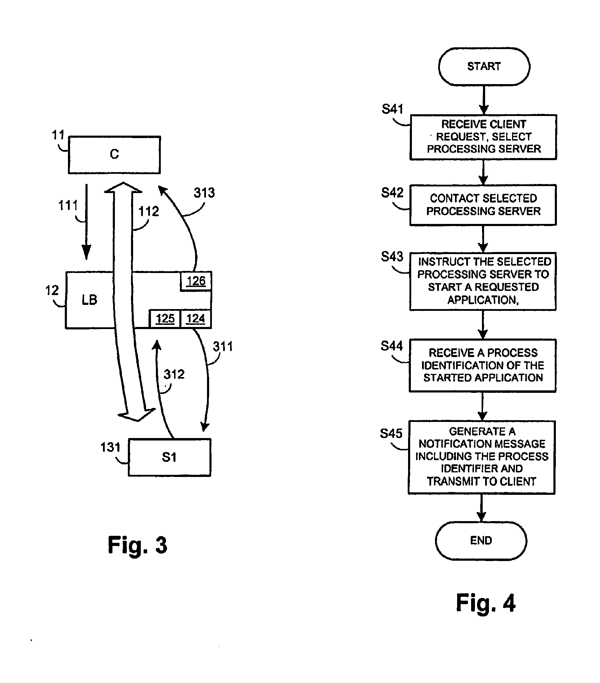

In the following a further embodiment of the invention will be described with respect to Fig. 3. Fig. 3 shows a block diagram illustrating an arrangement for load balancing in a network according to a further embodiment of the invention.

Fig. 3 shows a client 11, a load balancing means 12, an exemplary processing server 131 and arrows 111, 112, 311, 312, and 313 illustrating flow of information in the shown embodiment.

In the embodiment of Fig. 3 it is assumed that the load balancing means 12 selected the processing server 131 for serving the request from the client.

The embodiment of Fig. 3 is similar to the embodiment described with respect to Fig. 1, with the difference that after selecting the processing server the load balancing means and the selected processing server exchange information.

Accordingly, as before described with respect to Fig. 1 the load balancing means 12 receives a client request illustrated by the arrow 111 from the client 11. The load balancing server selects the processing server, in the shown example processing server 131 for serving the request, also as for example outlined with respect to Fig. 1. Further, from the request received from the client the load balancing means knows a desired application to be launched at the processing server 131 in connection with the request from the client 11.

The load balancing means 12 may comprise instruction means 124 for instructing the selected processing server to launch the application requested by the client 11. The instruction means 124 transmits a corresponding instruction message as illustrated by arrow 311 to the selected processing server. The instruction message may be directed to a daemon at the processing server, instructing the daemon to launch the requested application.

Further, the load balancing means 12 may comprise means 125 for receiving a process identifier specifying the launched application at the processing server 131, transmitted with an identification message illustrated by arrow 312 from the processing server 131 to the process identification means 125.

Further, the load balancing means 12 may include process notification means 126 for generating a notification message including the process identifier for the client. The process notification means 126 generates the notification message and transmits same to the client 11 as illustrated by an arrow 313 in Fig. 3.

The transmission of the messages 311, 312 and 313 between the load balancing means 12, the processing server 131 and the client 11 may be accomplished via a network, such as the local area network 14 shown in Fig. 1, a wide area network, such as the Internet, and may include dedicated communication links including wireless transmission.

The application instruction means 124, the process identification means 125 and the process notification means 126 may be constituted by code sections for execution on a data processing device, containing instructions for instructing the selected processing server to launch the requested application, to receive a process identifier from the processing server and to notify the client of the process identifier.

The embodiment of the invention described with respect to Fig. 3 provides the advantage that the load balancing means 12 may launch the requested application immediately, i.e., before establishing the communication, illustrated by double-arrow 112 between the client 11 and the processing server 131. Thus, the client may access the started application using the process identifier without delay after establishing the communication link between the client 11 and the processing server 131.

In the following, a further embodiment of the invention will be described with respect to Fig. 4. Fig. 4 shows a sequence of processing steps preferably performed at the load balancing means 12 according to a further embodiment of the invention.

In a step S41 the load balancing means 12 receives a client request from the client 11 and selects a processing server, e.g. processing server 131, as outlined in detail with respect to previous embodiments.

Thereafter, in a step S42 the load balancing means 12 contacts the selected processing server and in a step S43 instructs the selected processing server to start an application requested in connection with the client request from the client 11. This may be accomplished by contacting a daemon at the selected processing server and instructing the daemon to launch the requested application, for example a word processing program, a mail program or similar, as outlined before. The selected processing server will thereupon launch the requested application and in a step S44 the load balancing means 12 receives a process identifier specifying the launched application from the selected processing server or the daemon at the selected processing server, respectively.

Thereafter, in a step S45 the load balancing means 12 generates a notification message including the process identifier and transmits same to the client 11.

The client 11 is now able to directly access the launched application at the selected processing server upon completion of the communication link between the client 11 and the processing server 131, as for example illustrated by double-arrow 112 in Fig. 3.

The described sequence of processing and notification steps particularly provides an advantage in case establishing the communication link between the client 11 and the selected processing server takes long, since in this case before the communication link is established the requested application is already launched at the processing server.

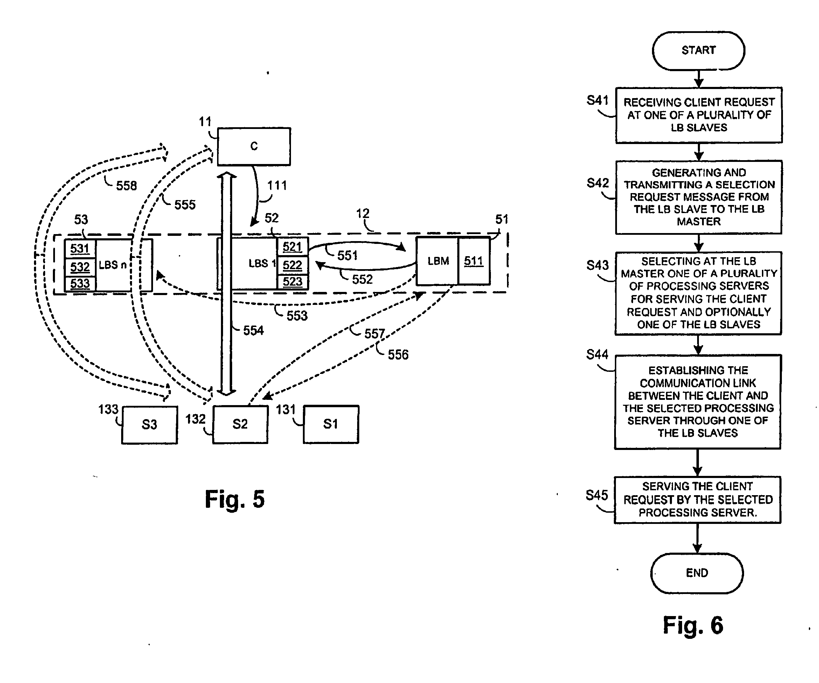

In the following a further embodiment of the invention will be described with respect to Fig. 5. Fig. 5 shows a system for load balancing a processing load according to another embodiment of the invention.

Fig. 5 shows an exemplary client 11 of a plurality of clients and exemplary three processing servers 131, 132 and 133, as for example outlined with respect to previous embodiments. Further, Fig. 5 shows load balancing means 12 comprising a load balancing master 51, a load balancing slave 52 and a load balancing slave 53. Even though only two load balancing slaves are shown, it is understood that an arbitrary number of load balancing slaves may be provided.

The load balancing master and the load balancing slaves may be constituted by data processing devices, for example servers. Each of the load balancing master 51 and the load balancing slaves 52 and 53 may be located at an arbitrary location and may communicate to each other via communication links for example established through a network, e.g. using packet switched transmission, dedicated communication lines including wireless transmission or similar. The load balancing means 12 is illustrated using a broken line in order to illustrate that the load balancing means comprising the load balancing master 51 and the load balancing slaves 52 and 53 may be a distributed system of data processing devices.

In the following the load balancing slaves will be outlined in further detail. As the load balancing slaves 52 and 53 have corresponding structure and function, in the following load balancing slave 52 will be described as an example.

The load balancing slave 52 generally is responsible for receiving client requests and to ask the load balancing master 51 for selection of a processing server and/or a load balancing slave 52 or 53 for serving the request.

The load balancing slave 52 may comprise slave receiving means 521 for receiving a client request from client 11, the request being transmitted from the client to the load balancing slave 52 by an arrow denoted 111 and as outlined with respect to previous embodiments. The slave receiving means 521 generally corresponds to the balancer receiving means 121 outlined with respect to Fig. 1.

Further, the load balancing slave 52 may comprise selection request message means 522 to generate a selection request message and for transmitting the selection request message to the load balancing master. The selection request message may include information on the client request such as a requested application, requested data or similar, and may further comprise information on a client location, a client identity. Further, the selection request message may include information on the identity of the requesting load balancing slave, in the present case of load balancing slave 52, and may further comprise information on a location and/or processing load at the requesting load balancing slave. The transmission of the selection request message to the load balancing master 51 is illustrated by an arrow 551.

Further, the load balancing slave 52 may comprise slave communication means 523 for establishing a communication link between the client 11 and the selected processing server through the load balancing slave 52. The slave communication means 523 may be instructed to establish the communication between the client 11 and the selected processing server in case the load balancing slave 52 receives a selection instruction message from the load balancing master 51, as illustrated by an arrow 552.

However, it is noted that it is also possible to establish a direct communication link 558 between the client 11 and processing server 132, i.e. a communication link which does not pass through the load balancing slave 52, in which case for example the client 11 could be instructed to contact the selected processing server in order to establish a communication link.

As indicated above, the structure of the load balancing slave 53 corresponds to the structure of the load balancing slave 52 and therefore, the load balancing slave 53 includes slave receiving means 531, selection request message means 532 and slave communication means 533.

The slave receiving means, selection request message means and slave communication means may be realized by code sections executed on at least one data processing device, such as a corresponding processing server or may be dedicated devices and may also realized as hardware units.

In the following, the load balancing master 51 will be described in further detail.

The load balancing master 51 most importantly may be responsible for selecting one of the available processing servers, in the shown embodiment processing servers 131, 132 and 133. Further, the load balancing master 51 may be responsible to select one of a plurality of load balancing slaves, in the shown embodiment one of the load balancing slaves 52 and 53.

The load balancing master receives a selection request message, in the shown embodiment transmitted from the load balancing slave 52 to the load balancing master 51 as indicated by arrow 551. The load balancing master analyzes the received selection request message in order to detect information on the request from the client, for example an application requested, data requested, a client identity, client location and similar. Further, the load balancing master may detect information on the load balancing slave, in case it is included in the selection request message. This may for example be information on the identity of the requesting load balancing slave, in the shown example of load balancing slave 52 and information on the location of the requesting load balancing slave, a relative processing load and similar.

Further, if included the load balancing master may extract information from the selection request message regarding processing servers accessible from the requesting load balancing slave.

The load balancing master 51 comprises server selection means 122 for selecting one of a plurality of processing servers for serving the client request, as it was for example outlined with respect to previous embodiments.

Further, the load balancing master may comprise slave selection means 511 for selecting one of a plurality of load balancing slaves available for establishing the communication link between the client 11 and the selected processing server. The selection of the load balancing slave at the load balancing master 51 may for example be based on a client location, a location of available load balancing slaves or a location of a processing server, as it may be desirable to select a load balancing slave in close proximity to the selected processing server and/or the requesting client.

The selection of the load balancing slave at the load balancing master 51 may also be based on a comparison of the client location and a location of a load balancing slave and/or available processing servers, as it may be desirable to provide short communication paths between the client 11 and the selected processing server.

Still further the selection of the load balancing slave may be based on a relative processing load at the load balancing slaves and similar.

In brief, the selection of the load balancing slave may be based on at least one of the group consisting of
- a client location,
- a load balancing slave location,
- a client identity, and
- a processing load at a load balancing slave, and
- an application requested with a client request message.

Thus, the selection of the processing server and of the load balancing slave for serving the client request from client 11 may be optimized by grouping client request from a particular client for service by a specific processing server and/or load balancing slave, and may be optimized in view of processing load at processing servers and load balancing slaves, and may be optimized in view of short communication links between the client 11, the selected load balancing slave and the selected processing server.

It is noted that the load balancing master 51, in case slave selection means 511 are not provided, may always instruct a requesting load balancing slave for serving the request.

In the shown embodiment of Fig. 5 it is assumed that the client 11 transmits a client request to the load balancing slave 52, as indicated by arrow 111. This may be achieved by configuring the client 11 to transmit client requests always to the load balancing slave 52, or may be decided case by case. Obviously, it is also possible that at the client 11 the load balancing slave 53 is configured as primary load balancing slave. Furthermore, it is possible that the load balancing slaves, in case a processing load capacity is exceeded, to reject client requests from client 11 and to instruct the client to redirect the client request to another load balancing slave.

Further, in the embodiment shown in Fig. 5 it is assumed that the load balancing master selects processing server 132 for serving the client request, and further, it is assumed that the load balancing master 51 selects load balancing slave 52 for establishing the communication link between the client 11 and the processing server 132, as indicated by a double-lined arrow 554. In this case the load balancing slave 52 may receive a selection instruction message from the load balancing master 51 as indicated by arrow 552.

However, it is also possible that at the load balancing master 51 the load balancing slave 53 is selected for serving the client request from client 11, and in this case the load balancing slave 53 may receive a selection instruction message from the load balancing master 51, as indicated by dotted arrow 553 in Fig. 5. In this case the load balancing slave 53 establishes the communication link between the client 11 and the selected processing server 132, as indicated by a dotted double-arrow 555.

Obviously, it is also possible that instead of processing server 132 any other processing server is selected for serving the request.

In the embodiment of Fig. 5 it is possible that the load balancing master 51, preferably after receiving and analyzing a selection request message from one of the load balancing slaves and after selecting one of the processing servers for serving the request, contacts the selected processing server in order to instruct the selected processing server to launch an application requested with the client request from client 11. The load balancing master may therefore comprise processing server instruction means for instructing the selected processing server to launch an application requested by the client. Further, the load balancing means 51 may comprise process identifier means for receiving a process identifier specifying the started application at the selected processing server. The selected processing server may be instructed by a message as illustrated by an arrow 556 and may return a process ID to the load balancing master 51 as illustrated by an arrow 557.

This was already outlined in further detail with respect to previous embodiments, particularly with respect to the embodiment of Fig. 3.

The load balancer described with respect to Fig. 5 allows to provide a superior balancing of processing loads in serving client requests from a plurality of clients by providing a combination of a plurality of load balancing slaves and a load balancing master. The load balancing slaves may be responsible for receiving client requests, and for interrogating at the load balancing master a selection of a processing server and/or a load balancing slave for serving the request. As location information of the client, the load balancing slaves and the processing servers and identifiers of clients, load balancing slaves and processing servers may be provided, communication paths may be maintained short and requests from particular clients may be grouped for service involving preferably the same processing server and/or load balancing slave.

It is noted that a computer readable medium may be provided, having a program recorded thereon, where the program is to make a computer or system of data processing devices execute the above functions, particularly of the load balancing master and load balancing slaves.

Further, a computer program product may be provided comprising the computer readable medium.

In the following a further embodiment of the invention will be described with respect to Fig. 6. Fig. 6 shows a flow diagram of processing steps performed in the method for load balancing according to another embodiment of the invention.

The described operation may be performed by the arrangement for load balancing shown in Fig. 5, but is not limited thereto.

In a step S41 a client request is received at one of a plurality of load balancing slaves available. The load balancing slave may be pre-configured at the client 11 as primary load balancing slave or the client request may be redirected from another load balancing slave.

In a step S42 the load balancing slave receiving the client request generates a selection request message and transmits same to the load balancing master 51. The selection request message may include information on the client request, the requesting client and the load balancing slave, as outlined before with respect to previous embodiments.

After receiving the selection request message the load balancing master in a step S43 selects one of a plurality of processing servers for serving the client request, as outlined with respect to previous embodiments. Optionally, the load balancing master 51 may further select one of the load balancing slaves for serving the request or alternatively, may instruct the requesting load balancing slave to serve the client request. The load balancing master then instructs the selected load balancing slave or the requesting load balancing slave to serve the request.

Thereupon, in a step S44 the selected or requesting processing server establishes the communication link between the client and the selected processing server.

Thereafter, the client request is served by the selected processing server and load balancing slave in a step S45. Serving the client request preferably involves a transmission of data and instructions between the client 11 and the selected processing server directly or through the selected or requesting load balancing slave. As an example, applications executed at the selected processing server for serving the request from the client may involve word processing applications, graphic processors, scientific applications and similar. In serving the request the requesting client may transmit instructions to the selected processing server for controlling the requested application and the selected processing server may in response thereto transmit, e.g., image data for local display at the client.

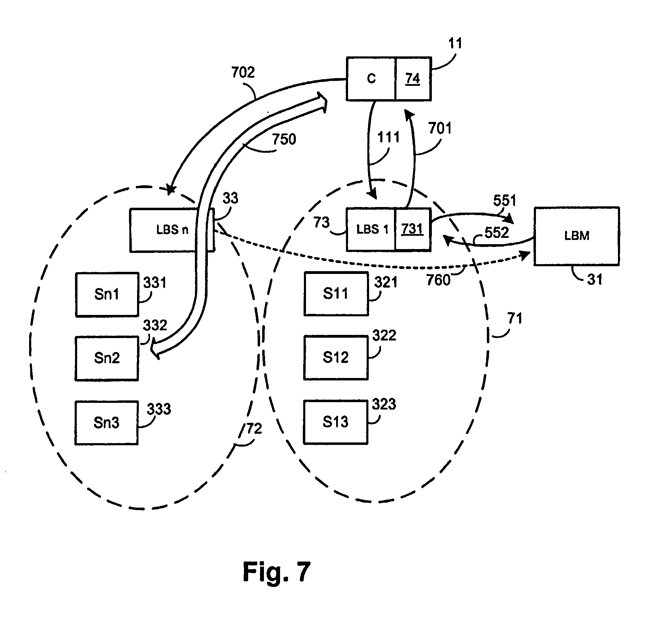

In the following a further embodiment of the invention will be described with respect to Fig. 7. Fig. 7 shows an arrangement for load balancing a processing load according to another embodiment of the invention.

Fig. 7 illustrates a client 11 of, e.g., a plurality of clients, a load balancing master 31, load balancing slaves 73 and 33 and a plurality of processing servers 321, 322, 323, 331, 332 and 333. In the shown embodiment the processing servers 321, 322 and 323 may be accessible from load balancing slave 73, e.g. through a local area network 71. The processing servers 331, 332 and 333 may be accessible through the load balancing slave 33, e.g. through a local area network 72. However, it is also possible that the individual passing servers are accessible through the corresponding load balancing slaves through other networks such as a wide area network as the Internet, or through dedicated communication lines including wireless transmission or similar.

The embodiment shown in Fig. 7 illustrates an example where a client request transmitted to a first load balancing slave leads to a selection for serving the request through a processing server accessible through another load balancing slave.

Further, differing from the embodiment described with respect to Fig. 5 the selected load balancing slave is not directly instructed to serve the request by the load balancing master 31, instead the selected load balancing slave may be instructed via the client 11 to serve the request. The client may receive an instruction message for contacting the selected load balancing slave from the load balancing master either directly or via the first load balancing slave, i.e. the load balancing slave initially requesting selection.

In the shown embodiment, it is assumed that the load balancing slave 73 initially received the request from client 11 as indicated by an arrow 111, and asked the load balancing master 31 for selection, leading to a selection of load balancing slave 33 and processing server 332.

The load balancing slave 73 initially receives the client request from client 11 and generates a selection request message for the load balancing master 31 as indicated by arrow 551. In the shown embodiment it is assumed that the load balancing master always responds to the requesting load balancing slave and therefore the selection instruction message containing information on a selected load balancing slave and/or processing server, in the shown embodiment processing server 332 and load balancing slave 33 will be returned to load balancing slave 73.

In the following the load balancing slave 73 shown in Fig. 7 will be outlined in further detail.

The load balancing slave 73 may comprise slave redirection means 731 for generating a redirection message for redirecting the client request to the selected load balancing slave, which in the shown case is load balancing slave 33. Further, the redirection means transmits the redirection message to the selected load balancing slave, in case the identification information contained in the selection instruction message does not identify the requesting load balancing slave, which in the present case is load balancing slave 73. The slave redirection means 731 may be realized by a code section executed at the load balancing slave or a separate data processing device.

The slave redirection means 731 may be configured to always transmit the redirection message containing information on the selected load balancing slave and selected processing server to the requesting client, in the present case to client 11, as indicated by an arrow 701.

It is noted that in case the selection instruction message received from the load balancing master, as indicated by arrow 552, would identify the load balancing slave 73 as selected load balancing slave, the load balancing slave 73 would directly serve the client request.

In the following, the configuration of the client 11 according to the described embodiment will be outlined in further detail.

The client 11 may comprise client redirection means 74 for receiving a redirection message from the load balancing slave the original client request was transmitted to, in the present case load balancing slave 73, and to generate a client request message to the load balancing slave specified by the redirection message. Therefore, based on the redirection message containing information on the selected load balancing slave and selected processing server the client 11 is enabled to generate a client request for transmission to the selected load balancing slave, in the present case load balancing slaves 33, as illustrated by an arrow 702. The client request transmitted to the selected load balancing slave preferably includes, in addition to the information of the client request as outlined with respect to previous embodiments, information on the selected processing server, in the present case processing server 332, in order to enable the load balancing slave 33 to establish the communication link between the client 11 and the processing server 332 through load balancing slave 33, as illustrated by a double-lined arrow 750. The client redirection means 74 may be realized by a code section executed at the client or a separate data processing device.

It is noted that the load balancing slave 33, upon receiving the client request illustrated by arrow 702 from client 11 may generate a further selection request message for the load balancing master 31, as illustrated by an arrow 760. This allows the load balancing master to reconsider the selection of load balancing slave and/or processing server, in case fundamentals of the previous decision changed. This may involve, for example, a changed load scenario at the load balancing slaves and processing servers, previous client requests, already started application, in response to client requests from a particular client and similar.

Further, it is noted that the shown grouping of load balancing slaves and processing servers is an example only and not necessarily limited to that shown in Fig. 7. Instead, for example, it is possible that load balancing slave 73 can also be able to access processing servers 331, 332 and 333.

In the shown embodiment of Fig. 7 a selection instruction message containing information on a selected load balancing slave and/or processing server is always transmitted from the load balancing master back to the requesting load balancing slave. The requesting load balancing slave thereupon, in case it is not selected for serving the request, generates a redirection message for the client, in order to instruct the client to redirect the client request to the selected load balancing slave.

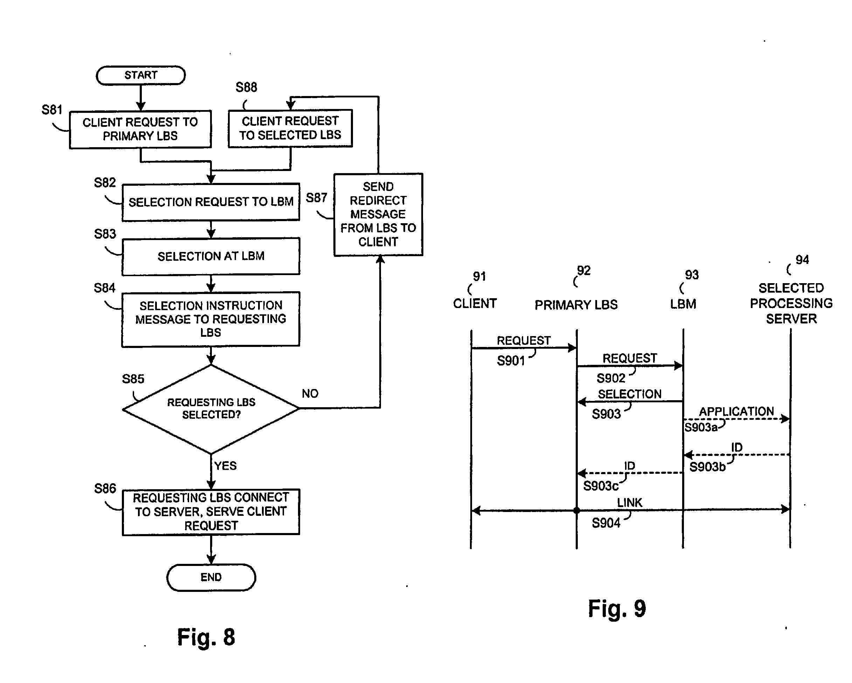

In the following a further embodiment of the invention will be described with respect to Fig. 8. Fig. 8 shows a flow diagram of processing steps of the method according to another embodiment of the invention.

The processing steps may be executed using the arrangement shown in Fig. 7, however, the embodiment of Fig. 8 is not limited thereto.

In a first step S81 a client request is transmitted to a primary load balancing slave. The primary load balancing slave may be a pre-selected load balancing slave or may be selected case by case. The pre-selection may depend on location of the client and load balancing slave, user preference and similar. In a step S82 a selection request is transmitted from the receiving load balancing slave to the load balancing master. The selection request message may include a request to select a processing server and/or a load balancing slave for serving the request. The load balancing master in a step S83 selects a processing server and/or a load balancing slave for serving the request, as for example outlined with respect to previous embodiments.

In a step S84 the load balancing master sends a selection instruction message to the requesting load balancing slave, i.e., the load balancing slave which initially received the client request and generated the selection request message.

Thereafter, in a step S85 it is detected at the requesting load balancing slave whether the requesting load balancing slave is selected load balancing slave. In case the requesting load balancing slave is the selected load balancing slave, i.e. in case the decision is "YES", the requesting load balancing slave in a step S86 connects to the selected processing server in order to establish a communication link between the client 11 and the selected processing server in order to serve the client request. Establishing the communication link and serving the client request may for example be accomplished as outlined with respect to previous embodiments.

In case in step S85 the requesting load balancing slave determines that the requesting load balancing slave is not the selected load balancing slave i.e. in case the decision is "NO", the requesting load balancing slave in a step S87 generates a redirect message and transmits same to the client. The redirect message may include information on the selected load balancing slave and/or information on the selected processing server. In a step S88 the client then transmits a client request to the selected load balancing slave and the flow continues with step S82.

The embodiment described with respect to Fig. 8 illustrates an example where a load balancing slave receiving a client request contacts the load balancing master for performing a selection and thus after varying numbers of iterations including redirection of the client request, a suitable load balancing slave and processing server will be determined.

In the following a further embodiment of the invention will be described with respect to Fig. 9. Fig. 9 shows a time sequence of messages of the method according to another embodiment of the invention.

In Fig. 9 events and messages at and between a client 91, a requesting load balancing slave 92, a load balancing master 93 and a selected processing server 94 are illustrated.

In a step S901 the client 91 sends a client request to the primary load balancing slave 92. The primary load balancing slave may be pre-configured at the client or may be selected case by case, as outlined before.

The primary load balancing slave 92 sends thereupon a selection request message in a step S902 to the load balancing master 93. The load balancing master selects a suitable processing server, e.g., according to location of the client and location of the processing server, processing load at individual processing servers reported to the load balancing master from the processing servers, or based on previous requests from clients, for example a processing server which already serves a previous request of a particular client could be selected for serving the client request. Selection may also be performed as outlined with respect to previous embodiments.

In a step S903 the load balancing master sends a selection message back to the primary load balancing slave 92, including an identifier of the selected processing server.

In a step S904 the primary load balancing slave 92 thereupon establishes a communication link between the client and the selected processing server 94 through the primary load balancing slave 92 for serving the request. Serving the request may be performed as outlined with respect to previous embodiments.

Alternatively, after step S903 the load balancing master may send an application instruction message in a step S903a to the selected processing server, instructing the selected processing server to already launch an application requested in connection with the client request from client 91. This may be accomplished by contacting a daemon on the server 94 and instructing the daemon to launch the application.

In a step S903b thereupon the selected processing server 94 or the daemon may return an identifier of a process corresponding to the requested application to the load balancing master 93.

Thereupon the load balancing master 93 may notify the primary load balancing slave 92 of the process ID in a step S903c, in preparation of establishing the communication link between the client 91 and the selected processing server 94. This proceeding allows to already launch a requested application before a communication link to the client is established. The process ID may include information on a communication end point, i.e. a device address and a port number.

As steps 903a, 903b and 903c are optional only, they are indicated by broken lines.

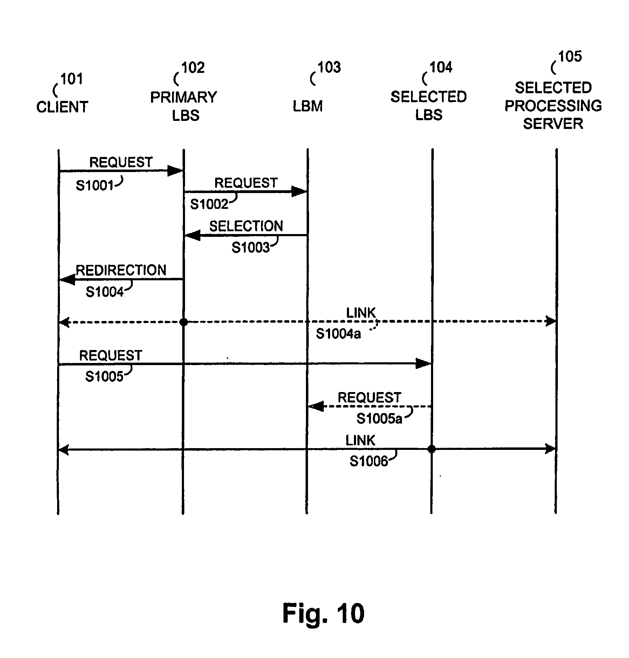

In the following a further embodiment of the invention will be described with respect to Fig. 10. Fig. 10 shows a time sequence of events and messages of the method for load balancing according to another embodiment of the invention.

Fig. 10 illustrates events and messages at a client 101, a primary load balancing slave 102, a load balancing master 103, a selected load balancing slave 104 and a selected processing server 105.

In the embodiment of Fig. 10 it is assumed that the load balancing master does not select the primary load balancing slave for serving the request but instead selects another load balancing slave for serving the request.

In a first step S1001 the client 101 transmits a request message to the primary load balancing slave 102. The request message may include a request for service involving a particular application to be executed on a processing server.

The primary load balancing slave 102 thereupon transmits a selection request message to the load balancing master 103 in a step S1002, which upon receiving the selection request message selects a processing server and a load balancing slave for serving the request. The selection of the load balancing slave and the processing server may depend on the location of the client 101, the location of the particular load balancing slaves, and the locations of available processing servers. Further, the selection may depend on a processing load at the respective load balancing slaves and processing servers, e.g. reported to the load balancing master. Further, the selection may depend on previous requests from the client, e.g. in order to group client requests for service involving preferably only one load balancing master and/or processing server. The selection may be accomplished as outlined with respect to previous embodiments.

In a step S1003 the load balancing master 103 transmits a selection instruction message to the primary load balancing slave 102 containing information on the selected load balancing slave and processing server.

In a step S1004, in case the primary load balancing slave is not selected load balancing slave, the primary load balancing slave 102 transmits a redirection message in a step S1004 to the client 101. The redirection message instructs the client to send a further request to the selected load balancing slave.

It is noted that in case at the load balancing master the primary load balancing slave is selected, the primary load balancing slave may directly proceed in a step S1004a to establish the communication link between the client 101 and the selected processing server 105.

The client 101 analyzes the redirection message and transmits a further client request in a step S1005 to the selected load balancing slave. This request preferably contains information on the selected processing server.

In a step S1006 the selected load balancing slave proceeds to establish a communication link between the client 101 and the selected processing server 105, as outlined with respect to previous embodiments, for serving the client request.

Alternatively, in a step S1005a, as indicated by a broken line, the selected load balancing slave may transmit a further selection request message to the load balancing master 103, e.g. for confirming the selection or for selecting another load balancing slave, in case selection fundamentals changed subsequent to the previous selection.

The embodiment of Fig. 10 allows a superior distribution of processing load among a plurality of load balancing slaves and processing servers.

According to another embodiment of the invention, a load balancer may have the following structural elements:
1) Load balancer for balancing a processing load in a network, comprising
   a code section containing instructions for receiving a client request from a client 11,
   a code section containing instructions for selecting one of a plurality of processing servers 131, 132, 133; 321, 322, 323, 331, 332, 333 for serving the client request, and
   a code section containing instructions for establishing a communication link 112; 554; 555; 750 between the client 11 and the selected processing server through the load balancing means.
2) Load balancer according to 1), including a plurality of load balancing slaves 33; 52, 53; 73; 92; 102, 104 and a load balancing master 31; 51; 93; 103, wherein
   each of the plurality of load balancing slaves includes
   a code section containing instructions for receiving a client request from a client 11,
   a code section containing instructions for generating a selection request message and for transmitting the selection request message to the load balancing master,
   a code section containing instructions for establishing a communication link between the client and the selected processing server through the load balancing slave, and
   the load balancing master includes a code section containing instructions for selecting one of a plurality of processing servers 131, 132, 133; 321, 322, 323, 331, 332, 333 for serving the client request.
3) Load balancer according to 1), wherein the load balancing means bases the selection of the processing server on at least one of the group consisting of
   a client location,
   a processing server location,
   a client identity,
   processing server load, and
   an application requested with a client request message.
4) Load balancer according to 1), wherein the load balancing means comprises
   a code section containing instructions for instructing the selected processing server to launch an application requested by the client,
   a code section containing instructions for receiving a process identifier specifying the started application from the selected processing server, and
   a code section containing instructions for generating a notification message including the process identifier for the client to contact the selected processing server using the process identifier.
5) Load balancer according to 2), wherein the load balancing master includes a code section containing instructions for selecting one of the plurality of load balancing slaves for establishing the communication link between the client and the selected processing server.
6) Load balancer according to 2), wherein the load balancing master includes a code section containing instructions for instructing the client to redirect the client request to the selected load balancing slave, in case the first load balancing slave is not the selected load balancing slave.
7) Load balancer according to 2), wherein
   the load balancing master includes a code section containing instructions for generating a selection instruction message including identification information identifying the selected load balancing slave and for transmitting the selection instruction message to the first load balancing slave, and
   the first load balancing slave includes a code section containing instructions for generating a redirection message for redirecting the client request to the selected load balancing slave.
8) Load balancer according to 1), wherein the selection of the load balancing slave is based on at least one of the group consisting of
   a client location,
   a load balancing slave location,
   a client identity, and
   a processing load at a load balancing slave, and
   an application requested with a client request message.
9) Load balancer according to 1), comprising a code section containing instructions for authenticating a user at the client 11.
10) Load balancer according to 1), wherein each processing server and load balancing slave is arranged to report in regular intervals its processing load to the load balancing master.
   According to another embodiment, a client may be adapted to cooperate with the load balancer as outlined above under 1) to 10) and comprise a code section containing instructions to generate a client request and to transmit the client request to the load balancing means 12.
   The client may further comprise a code section containing instructions to receive a redirection message and to generate a client request to the load balancing slave specified by the redirection message.
   According to another embodiment of the invention, a load balancing master may have the following structural elements:
11) Load balancing master for balancing a processing load in a network, comprising
   a code section containing instructions for receiving a selection request message from a load balancing slave 33; 52, 53; 73; 92; 102, 104,
   a code section containing instructions for selecting one of a plurality of processing servers 131, 132, 133; 321, 322, 323, 331, 332, 333 for serving the client request, and
   a code section containing instructions for instructing the selected load balancing slave to establish a communication link 112; 554; 555; 750 between the client 11 and the selected processing server.
12) Load balancing master according 11), wherein the load balancing master bases the selection of the processing server on at least one of the group consisting of
   a client location,
   a processing server location,
   a client identity,
   processing server load, and
   an application requested with a client request message.
13) Load balancing master according to 11), comprising
   a code section containing instructions for instructing the selected processing server to launch an application requested by the client,
   a code section containing instructions for receiving a process identifier specifying the started application from the selected processing server, and
   a code section containing instructions for generating a notification message including the process identifier for the client to contact the selected processing server using the process identifier.
14) Load balancing master according 11), comprising a code section containing instructions for selecting one of the plurality of load balancing slaves for establishing the communication link between the client and the selected processing server.
15) Load balancing master according 11), comprising a code section containing instructions for generating a selection instruction message including identification information identifying the selected load balancing slave and for transmitting the selection instruction message to the first load balancing slave.
16) Load balancing master according 11), wherein the selection of the load balancing slave is based on at least one of the group consisting of
   a client location,
   a load balancing slave location,
   a client identity, and
   a processing load at a load balancing slave, and
   an application requested with a client request message.
   According to another embodiment of the invention, a load balancing slave for cooperating with a load balancing master may have the following structural elements:
17) Load balancing slave, comprising
   a code section containing instructions for receiving a client request from a client 11,
   a code section containing instructions for generating a selection request message for requesting the load balancing master to select one of a plurality of processing servers 131, 132, 133; 321, 322, 323, 331, 332, 333 for serving the client request, and
   a code section containing instructions for establishing a communication link 112; 554; 555; 750 between the client 11 and the selected processing server.
18) Load balancing slave according to 17), comprising
   a code section containing instructions for receiving from the load balancing master a selection instruction message including identification information identifying the selected load balancing slave, and
   a code section containing instructions for generating a redirection message for redirecting the client request to the selected load balancing slave.
19) Load balancing slave according to 17), wherein the load balancing slave is arranged to report in regular intervals its processing load to the load balancing master.

## Claims

1. Method for balancing a processing load in a network having a plurality of processing servers (131, 132, 133; 321, 322, 323, 331, 332, 333) and load balancing means (12; 31, 33; 51, 52, 53; 73), including
receiving a client request from a client (11) at the load balancing means,
selecting at the load balancing means one of the plurality of processing servers for serving the client request,
establishing a communication link (112; 554; 555; 750) between the client and the selected processing server by the load balancing means, in order to enable serving the client request by the selected processing server through the communication link,
**characterized in that**
the load balancing means includes a load balancing master (31; 51; 93; 103) and a plurality of load balancing slaves (33; 52, 53; 73; 92; 102, 104),
the client request is received at a first load balancing slave,
a selection request message is generated at the first load balancing slave and transmitted from the first load balancing slave to the load balancing master,
the load balancing master performs the selection step, and
the communication link between the client and the selected processing server is established through one of the load balancing slaves.

2. Method according to claim 1, wherein the load balancing means bases the selection of the processing server on at least one of the group consisting of
a client location,
a processing server location,
a client identity,
a processing server load, and
an application requested with a client request message.

3. Method according to one of the preceding claims, wherein
the client request includes a request for execution of an application,
the load balancing means instructs the selected processing server to start the requested application,
the selected processing server returns a process identifier of the started application to the load balancing means, and
the load balancing means generates an instruction message including the process identifier for the client to contact the selected processing server using the process identifier.

4. Method according to one of the claims 1 - 3, including selecting at the load balancing master one of a plurality of the load balancing slaves for establishing the communication link between the client and the selected processing server, and
establishing the communication link through the selected load balancing slave.

5. Method according to one of the claims 1 - 4, including
generating at the load balancing master a selection instruction message including identification information identifying the selected load balancing slave,
transmitting the selection instruction message to the first load balancing slave,
establishing the communication link between the client and the selected processing server through the first load balancing slave, in case the identification information identifies the first load balancing slave as selected load balancing slave, and
generating a redirection message for redirecting the client request to the selected load balancing slave and transmitting the redirection message to the selected load balancing slave in case the identification information does not identify the first load balancing slave as selected load balancing slave.

6. Method according to claim 5, including transmitting the redirection message from the first load balancing slave to the client for instructing the client to transmit the client request to the selected load balancing slave.

7. Method according to claim 5 or 6, including transmitting from the selected load balancing slave a further selection request message to the load balancing master, in case the client request was redirected.

8. Method according to one of the claims 1 - 7, wherein the selection of the load balancing slave is based on at least one of the group consisting of
a client location,
a load balancing slave location,
a client identity, and
a processing load at a load balancing slave, and
an application requested with a client request message.

9. Method according to one of the preceding claims, wherein the load balancing means authenticates a user at the client.

10. Method according to one of the claims 1 - 9, wherein each processing server and load balancing slave in regular intervals reports its processing load to the load balancing master.

11. A computer readable medium, having a program recorded thereon, where the program is to make the computer execute the method according to one of the claims 1 - 10.

12. A computer program product comprising the computer readable medium according to claim 11.

13. Method for balancing a processing load in a network having a plurality of processing servers (131, 132, 133; 321, 322, 323, 331, 332, 333) and load balancing means (12; 31, 33; 51, 52, 53; 73), including
receiving a client request from a client (11) at the load balancing means,
selecting at the load balancing means one of the plurality of processing servers for serving the client request,
authorizing a communication link (112; 554; 555; 750) to be established between the client and the selected processing server by the load balancing means, in order to enable serving the client request by the selected processing server through the communication link,
**characterized in that**
the load balancing means includes a load balancing master (31; 51; 93; 103) for communicating with a plurality of load balancing slaves (33; 52, 53; 73; 92; 102, 104),
the load balancing master receives a selection request message from a first load balancing slave based on the client request, and
the load balancing master performs the selection step.

14. Method according to claim 13, wherein the load balancing master bases the selection of the processing server on at least one of the group consisting of
a client location,
a processing server location,
a client identity,
a processing server load, and
an application requested with a client request message.

15. Method according to one of the claims 13 or 14, wherein
the load balancing master instructs the selected processing server to start an application requested with the client request,
receives a process identifier of the started application from the selected processing server, and
the load balancing master generates an instruction message including the process identifier for the client to contact the selected processing server using the process identifier.

16. Method according to one of the claims 13 - 15, including
selecting at the load balancing master one of a plurality of the load balancing slaves for establishing the communication link between the client and the selected processing server, and
authorizing the selected load balancing slave to establish the communication link.

17. Method according to one of the claims 13 - 16, including generating at the load balancing master a selection instruction message including identification information identifying the selected load balancing slave,
transmitting the selection instruction message to the first load balancing slave,
authorizing the first load balancing slave to establish the communication link between the client and the selected processing server through, in case the identification information identifies the first load balancing slave as selected load balancing slave, and
generating a redirection message for redirecting the client request to the selected load balancing slave and transmitting the redirection message to the selected load balancing slave in case the identification information does not identify the first load balancing slave as selected load balancing slave.

18. Method according to claim 17, including instructing the first load balancing slave to transmit the redirection message to the client for instructing the client to transmit the client request to the selected load balancing slave.

19. Method according to claim 17 or 18, including receiving from the selected load balancing slave a further selection request message, in case the client request was redirected.

20. Method according to one of the claims 13 - 19, wherein the selection of the load balancing slave is based on at least one of the group consisting of
a client location,
a load balancing slave location,
a client identity, and
a processing load at a load balancing slave, and
an application requested with a client request message.

21. Method according to one of claims 13 - 20, wherein the load balancing means authenticates a user at the client.

22. Method according to one of the claims 13 - 21, wherein each processing server and load balancing slave in regular intervals reports its processing load to the load balancing master.

23. A computer readable medium, having a program recorded thereon, where the program is to make the computer execute the method according to one of the claims 13 - 22.

24. A computer program product comprising the computer readable medium according to claim 23.

25. Load balancer for balancing a processing load in network, comprising
load balancer receiving means (121) for receiving a client request from a client (11),
processing server selection means (122) for selecting one of a plurality of processing servers (131, 132, 133; 321, 322, 323, 331, 332, 333) for serving the client request, and
load balancer communication means (123) for establishing a communication link (112; 554; 555; 750) between the client (11) and the selected processing server,
**characterized in that**
the load balancer includes a plurality of load balancing slaves (33; 52, 53; 73; 92; 102, 104) and a load balancing master (31; 51; 93 ; 103), wherein
each of the plurality of load balancing slaves includes
slave receiving means (521, 531),
selection request message means (522, 532) for generating a selection request message and for transmitting the selection request message to the load balancing master,
slave communication means (523, 533) for establishing a communication link between the client and the selected processing server, and
the load balancing master includes the processing server selection means (122).

26. Load balancer according to claim 25, wherein the load balancer is adapted to base the selection of the processing server on at least one of the group consisting of
a client location,
a processing server location,
a client identity,
processing server load, and
an application requested with a client request message.

27. Load balancer according to claim 25 or 26, wherein the load balancing means comprises
application instruction means (124) for instructing the selected processing server to launch an application requested by the client,
process identification means (125) for receiving a process identifier specifying the started application from the selected processing server, and
process notification means (126) for generating a notification message including the process identifier for the client to contact the selected processing server using the process identifier.

28. Load balancer according to one of the claims 25 to 27, wherein the load balancing master includes slave selection means (511) for selecting one of the plurality of load balancing slaves for establishing the communication link between the client and the selected processing server.

29. Load balancer according to one of the claims 25 to 28, wherein the load balancing master includes means for instructing the client to redirect the client request to the selected load balancing slave, in case the first load balancing slave is not the selected load balancing slave.

30. Load balancer according to one of the claims 25 to 29, wherein
the load balancing master includes means for generating a selection instruction message including identification information identifying the selected load balancing slave and for transmitting the selection instruction message to the first load balancing slave, and
the first load balancing slave includes redirection means (731) for generating a redirection message for redirecting the client request to the selected load balancing slave.

31. Load balancer according to one of the claims 25 to 30, wherein the load balancer is adapted to base a selection of the load balancing slave on at least one of the group consisting of
a client location,
a load balancing slave location,
a client identity, and
a processing load at a load balancing slave, and
an application requested with a client request message.

32. Load balancer according to one of the claims 25 to 31, comprising means for authenticating a user at the client (11).

33. Load balancer according to one of the claims 25 to 32, wherein each load balancing slave is arranged to report in regular intervals its processing load to the load balancing master.

34. Client data processing device adapted to cooperate with the load balancer of one of the claims 25 to 33, comprising
means to generate a client request and to transmit the client request to the load balancer; and
client redirection means (74) to receive a redirection message and to generate a client request to a load balancing slave specified by the redirection message.

35. Client data processing device according to claim 34, wherein the client request includes at least one of the group consisting of
a client location,
a client identity, and
an identifier of a requested application.

36. Load balancing master for balancing a processing load in a network, comprising
load balancer receiving means (121) for receiving a selection request message from one of a plurality of load balancing slaves (33; 52, 53; 73; 92; 102, 104), the selection request message including a request for selection of one of a plurality of processing servers (131, 132, 133; 321, 322, 323, 331, 332, 333);
processing server selection means (122) for selecting one of said processing servers for serving the client request; and
instruction means for instructing the load balancing slave to establish a communication link (112; 554; 555; 750) between a client (11) and the selected processing server.

37. Load balancing master according to claim 36, wherein the selection of the processing server is based on at least one of the group consisting of
a client location,
a processing server location,
a client identity,
processing server load, and
an application requested with a client request message.

38. Load balancing master according to one of the claims 36 or 37, comprising
application instruction means (124) for instructing the selected processing server to launch an application requested by the client,
process identification means (125) for receiving a process identifier specifying the started application from the selected processing server, and
process notification means (126) for generating a notification message including the process identifier for the client to contact the selected processing server using the process identifier.

39. Load balancing master according to one of the claims 36 to 38, comprising slave selection means (511) for selecting one of the plurality of load balancing slaves for establishing the communication link between the client and the selected processing server.

40. Load balancing master according to one of the claims- 36 to 39, comprising means for generating a selection instruction message including identification information identifying the selected load balancing slave and for transmitting the selection instruction message to the first load balancing slave.

41. Load balancing master according to one of the claim- 36 to 40, wherein the load balancing master is adapted to base a selection of the load balancing slave on at least one of the group consisting of
a client location,
a load balancing slave location,
a client identity, and
a processing load at a load balancing slave, and
an application requested with a client request message.

42. Load balancing slave adapted to cooperate with the load balancing master according to one of the claims 36 to 41, comprising
slave receiving means (521; 531) for receiving a client request from a client (11),
selection request message means (522, 532) for generating a selection request message for requesting the load balancing master to select one of a plurality of processing servers (131, 132, 133; 321, 322, 323, 331, 332, 333) for serving the client request, and slave communication means (523; 533) for establishing a communication link (112; 554; 555; 750) between the client (11) and the selected processing server.

43. Load balancing slave according to claim 42, comprising
means for receiving from the load balancing master a selection instruction message including identification information identifying the selected load balancing slave, and
redirection means (731) for generating a redirection message for redirecting the client request to the selected load balancing slave.

44. Load balancing slave according to claim 42 or 43, wherein the load balancing slave is arranged to report in regular intervals its processing load to the load balancing master.

## Patentansprüche

1. Ein Verfahren zum Ausgleichen einer Verarbeitungslast in einem Netzwerk, das eine Vielzahl von verarbeitenden Servern (131, 132, 133; 321, 322, 323; 331, 332, 333) und eine Lastausgleichseinrichtung (12; 31; 33; 51; 52; 53; 73) besitzt, das beinhaltet:
Empfangen einer Clientanfrage von einem Client (11) an der Lastausgleichseinrichtung,
Auswählen eines aus der Vielzahl der verarbeitenden Server an der Lastausgleicheinrichtung, um die Anfrage des Client zu bedienen,
Aufbauen einer Kommunikationsverbindung (112, 554, 555, 750) zwischen dem Client und dem ausgewählten, verarbeitenden Server durch die Lastausgleicheinrichtung, um das Bedienen der Clientanfrage durch den ausgewählten, verarbeitenden Server durch die Kommunikationsverbindung zu ermöglichen,
**dadurch gekennzeichnet, dass**
die Lastausgleicheinrichtung einen Lastausgleichshauptrechner (31; 51; 93; 103) und eine Vielzahl von Lastausgleichsnebenrechnern (33, 52, 53, 73, 92, 102, 104) einschließt,
die Clientanfrage an einem ersten Lastausgleichsnebenrechner empfangen wird,
eine Auswahlanfragenachricht an dem ersten Lastausgleichsnebenrechner erzeugt wird und vom ersten Lastausgleichsnebenrechner zu dem Lastausgleichshauptrechner übertragen wird,
der Lastausgleichshauptrechner den Auswahlschritt durchführt, und
die Kommunikationsverbindung zwischen dem Client und dem ausgewählten, verarbeitenden Server durch einen der Lastausgleichsnebenrechner aufgebaut wird.

2. Ein Verfahren gemäß Anspruch 1, wobei die Lastausgleicheinrichtung die Auswahl des verarbeitenden Servers auf mindestens ein (Element) der Gruppe gründet, die besteht aus:
einem Standort des Clients
einem Standort des verarbeitenden Servers
einer Identität des Clients
einer Last des verarbeitenden Servers, und
einer Anwendung, die durch eine Clientanfragenachricht angefragt wird.

3. Ein Verfahren gemäß einem der vorangehenden Ansprüche, wobei
die Clientanfrage eine Anfrage zur Ausführung einer Anwendung einschließt,
die Lastausgleicheinrichtung den ausgewählte verarbeitenden Server anweist, die angefragte Anwendung zu starten,
der ausgewählte, verarbeitende Server einen Prozessidentifikator der gestarteten Anwendung an die Lastausgleicheinrichtung zurückgibt, und
die Lastausgleicheinrichtung eine Anweisungsnachricht erzeugt, die den Prozessidentifikator einschließt, damit der Client den ausgewählten, verarbeitenden Server durch Verwenden des Prozessidentifikators kontaktiert.

4. Ein Verfahren gemäß einem der Ansprüche 1 - 3, das einschließt:
Auswählen eines aus einer Vielzahl der Lastausgleichsnebenrechner an dem Lastausgleichshauptrechner, um eine Kommunikationsverbindung zwischen dem Client und dem ausgewählten, verarbeitenden Server aufzubauen, und
Aufbauen der Kommunikationsverbindung durch den ausgewählten Lastausgleichsnebenrechner.

5. Ein Verfahren gemäß einem der Ansprüche 1-4, das einschließt:
Erzeugen einer Auswahlanweisungsnachricht am Lastausgleichshauptrechner, die eine Identifikationsinformation einschließt, die den ausgewählten Lastausgleichsnebenrechner identifiziert,
Übertragen der Auswahlanweisungsnachricht an den ersten Lastausgleichsnebenrechner,
Aufbauen einer Kommunikationsverbindung zwischen dem Client und dem ausgewählten, verarbeitenden Servers durch den ersten Lastausgleichsnebenrechner, im Falle, dass die Identifikationsinformation den ersten Lastausgleichsnebenrechner als den ausgewählten Lastausgleichsnebenrechner identifiziert, und
Erzeugen einer Umleitungsnachricht zum Umleiten der Clientanfrage an den ausgewählten Lastausgleichsnebenrechner und Übertragen der Umleitungsnachricht an den ausgewählten Lastausgleichsnebenrechner im Falle, dass die Identifikationsinformation nicht den ersten Lastausgleichsnebenrechner als den ausgewählten Lastausgleichsnebenrechner identifiziert.

6. Ein Verfahren gemäß Anspruch 5, das ein Übertragen der Umleitungsnachricht von dem ersten Lastausgleichsnebenrechner zu dem Client einschließt, um den Client anzuweisen, die Clientanfrage an den ausgewählten Lastausgleichsnebenrechner zu übertragen.

7. Ein Verfahren gemäß der Ansprüche 5 oder 6, das die Übertragung einer weiteren Auswahlanfragenachricht von dem ausgewählten Lastausgleichsnebenrechner an den Lastausgleichshauptrechner einschließt, im Falle dass die Clientanfrage umgeleitet wurde.

8. Ein Verfahren gemäß einem der Ansprüche 1 - 7, wobei die Auswahl des Lastausgleichsnebenrechners auf mindestens ein (Element) der Gruppe gründet, die besteht aus:
einem Standort des Clients,
einem Standort des verarbeitenden Lastausgleichsnebenrechner,
einer Identität des Clients, und
einer Verarbeitungslast an einem Lastausgleichsnebenrechner, und
einer Anwendung, die durch eine Clientanfragenachricht angefragt wird.

9. Ein Verfahren gemäß einem der vorangehenden Ansprüche, wobei die Lastausgleichseinrichtung einen Benutzer am Client authentifiziert.

10. Ein Verfahren gemäß einem der Ansprüche 1 - 9, wobei jeder verarbeitende Server und Lastausgleichsnebenrechner in regelmäßigen Intervallen seine Verarbeitungslast an den Lastausgleichshauptrechner meldet.

11. Ein computerlesbares Medium, auf dem ein Programm aufgezeichnet ist, wobei das Programm dafür da ist, den Computer das Verfahren gemäß einem der Ansprüche 1 -10 ausführen zu lassen.

12. Ein Computerprogrammerzeugnis, das das computerlesbare Medium gemäß Anspruch 11 beinhaltet.

13. Ein Verfahren zum Ausgleichen einer Verarbeitungslast in einem Netzwerk, dass eine Vielzahl von verarbeitenden Servern (131, 132, 133; 321, 322, 323; 331, 332, 333) und eine Lastausgleichseinrichtung (12, 31, 33, 51, 52, 53, 73) besitzt, das beinhaltet:
Empfangen einer Client-Anfrage von einem Client (11) an der Lastausgleichseinrichtung,
Auswählen eines aus der Vielzahl der verarbeitenden Server an der Lastausgleicheinrichtung, um die Anfrage des Client zu bedienen,
Autorisieren einer Kommunikationsverbindung (112, 554, 555, 750), die zwischen dem Client und dem ausgewählten, verarbeitenden Server aufgebaut werden soll, durch die Lastausgleicheinrichtung, um das Bedienen der Clientanfrage durch den ausgewählten, verarbeitenden Server durch die Kommunikationsverbindung zu ermöglichen,
**dadurch gekennzeichnet, dass**
die Lastausgleicheinrichtung einen Lastausgleichshauptrechner (31; 51; 93; 103) für das Kommunizieren mit einer Vielzahl von Lastausgleichsnebenrechner (33; 52, 53; 73'; 92; 102, 104) einschließt,
der Lastausgleichshauptrechner eine Auswahlanfragenachricht von einem ersten Lastausgleichsnebenrechner auf Grundlage einer Clientanfrage empfängt, und
der Lastausgleichshauptrechner den Auswahlschritt durchführt.

14. Ein Verfahren gemäß Anspruch 13, wobei der Lastausgleichshauptrechner die Auswahl des verarbeitenden Servers auf mindestens ein (Element) der Gruppe gründet, die besteht aus:
einem Standort des Clients,
einem Standort des verarbeitenden Servers,
einer Identität des Clients,
einer Verarbeitungslast des Servers, und
einer Anwendung, die durch eine Clientanfragenachricht angefragt wird.

15. Ein Verfahren gemäß einem der Ansprüche 13 oder 14, wobei
der Lastausgleichshauptrechner den ausgewählten, verarbeitenden Server anweist, eine Anwendung zu starten, die durch die Clientanfrage angefragt wird,
einen Prozessidentifikator der gestarteten Anwendung von dem ausgewählten, verarbeitenden Server empfängt, und
der Lastausgleichshauptrechner eine Anweisungsnachricht erzeugt, die einen Prozessidentifikator einschließt, damit der Client den ausgewählten, verarbeitenden Server durch Verwenden des Prozessidentifikators kontaktiert.

16. Ein Verfahren gemäß einem der Ansprüche 13 - 15, das einschließt:
Auswählen eines aus einer Vielzahl von Lastausgleichsnebenrechnern an dem Lastausgleichshauptrechner zum Aufbauen der Kommunikationsverbindung zwischen dem Client und dem ausgewählten, verarbeitenden Servers, und
Autorisieren des ausgewählten Lastausgleichsnebenrechners die Kommunikationsverbindung aufzubauen.

17. Ein Verfahren gemäß einem der Ansprüche 13 -16, das an dem Lastausgleichshauptrechner das Erzeugen einer Auswahlanweisungsnachricht einschließt, die eine Identifikationsinformation einschließt, die den ausgewählten Lastausgleichsnebenrechner identifiziert,
Übertragen der Auswahlanweisungsnachricht an den ersten Lastausgleichsnebenrechner,
Autorisieren des ersten Lastausgleichsnebenrechner, eine Kommunikationsverbindung zwischen dem Client und dem ausgewählten, verarbeitenden Servers aufzubauen **dadurch**, in dem Fall dass die Identifikationsinformation den ersten Lastausgleichsnebenrechner als ausgewählten Lastausgleichsnebenrechner identifiziert,
Erzeugen einer Umleitungsnachricht, um die Clientanfrage an den ausgewählten Lastausgleichsnebenrechner umzuleiten und Übertragen der Umleitungsnachricht an den Lastausgleichsnebenrechner im dem Fall, dass die Identifikationsinformation nicht den ersten Lastausgleichsnebenrechner als ausgewählten Lastausgleichsnebenrechner identifiziert.

18. Ein Verfahren gemäß Anspruch 17, das das Anweisen des ersten Lastausgleichsnebenrechners zum Übertragen der Umleitungsnachricht an den Client einschließt, um den Client anzuweisen, die Clientanfrage an den ausgewählten Lastausgleichsnebenrechner zu übertragen.

19. Ein Verfahren gemäß Anspruch 17 oder 18, das das Empfangen einer weiteren Auswahlanfragenachricht von dem ausgewählten Lastausgleichsnebenrechner einschließt, in dem Fall dass die Clientanfrage umgeleitet wurde.

20. Ein Verfahren gemäß einem der Ansprüche 13 - 19, wobei die Auswahl des Lastausgleichsnebenrechners auf mindestens ein (Element) der Gruppe gründet, die besteht aus:
einem Standort des Clients,
einem Standort des Lastausgleichsnebenrechners,
einer Identität des Clients, und
einer Verarbeitungslast am Lastausgleichsnebenrechner, und
einer Anwendung, die durch eine Clientanfragenachricht angefragt wird.

21. Ein Verfahren gemäß einem der Ansprüche 13 - 20, wobei die Lastausgleicheinrichtung einen Benutzer am Client authentifiziert.

22. Ein Verfahren gemäß einem der Ansprüche 13 - 21, wobei jeder verarbeitende Server und Lastausgleichsnebenrechner in regelmäßigen Intervallen seine Verarbeitungslast an den Lastausgleichshauptrechner meldet.

23. Ein computerlesbares Medium, auf dem ein Programm aufgezeichnet ist, wobei das Programm dafür da ist, den Computer das Verfahren gemäß einem der Ansprüche 13 - 22 ausführen zu lassen.

24. Ein Computerprogrammerzeugnis, das das computerlesbare Medium gemäß Anspruch 23 beinhaltet.

25. Einen Lastausgleicher, um eine Verarbeitungslast in einem Netzwerk auszugleichen, der beinhaltet:
eine Lastausgleichempfangseinrichtung (121) zum Empfangen einer Clientanfrage von einem Client (11),
eine Verarbeitungsserverauswahleinrichtung (122), um einen aus einer Vielzahl von verarbeitenden Servern (131, 132, 133; 321, 322, 323; 331, 332, 333) zum Bedienen der Clientanfrage auszuwählen, und
eine Lastausgleichkommunikationseinrichtung (123) zum Aufbauen einer Kommunikationsverbindung (112; 554; 555; 750) zwischen dem Client (11) und dem ausgewählten, verarbeitenden Server,
**dadurch gekennzeichnet, dass**
der Lastenausgleicher eine Vielzahl von Lastausgleichsnebenrechnern (33; 52; 53; 73; 92; 102; 104) und einen Lastausgleichshauptrechner (31; 51; 93; 103) einschließt, wobei
jeder aus der Vielzahl der Lastausgleichsnebenrechner einschließt:
eine Nebenrechnerempfangseinrichtung (521, 531),
eine Auswahlanfragenachrichteinrichtung (522, 532) zum Erzeugen einer Auswahlanfragenachricht und zum Übertragen der Auswahlanfragenachricht an den Lastausgleichshauptrechner,
eine Nebenrechnerkommunikationseinrichtung (523, 533) zum Aufbauen einer Kommunikationsverbindung zwischen dem Client und dem ausgewählten, verarbeitenden Server, und
der Lastausgleichshauptrechner die Verarbeitungsserverauswahleinrichtung (122) einschließt.

26. Einen Lastausgleicher gemäß Anspruch 25, wobei der Lastausgleicher angepasst ist, die Auswahl des verarbeitenden Servers auf mindestens ein (Element) der Gruppe zu gründen, die besteht aus:
einem Standort des Clients,
einem Standort des verarbeitenden Servers,
einer Identität des Clients,
einer Verarbeitungslast des Servers, und
einer Anwendung, die durch eine Clientanfragenachricht angefragt wird.

27. Einen Lastausgleicher gemäß den Ansprüchen 25 oder 26, wobei die Lastausgleicheinrichtung beinhaltet
eine Anwendungsanweisungseinrichtung (124) zum Anweisen des ausgewählten, verarbeitenden Servers eine Anwendung zu starten, die von einem Client angefragt wird,
eine Prozessidentifikationseinrichtung (125) zum Empfangen eines Prozessidentifikators, der die gestartete Anwendung von dem ausgewählten, verarbeitenden Server spezifiziert, und
eine Prozessbenachrichtigungseinrichtung (126) zum Erzeugen einer Benachrichtigungsnachricht, die den Prozessidentifikator einschließt, damit der Client durch Verwenden des Prozessidentifikators den ausgewählten, verarbeitenden Server kontaktiert.

28. Einen Lastausgleicher gemäß einem der Ansprüche 25 bis 27, wobei der Lastausgleichshauptrechner eine Nebenrechnerauswahleinrichtung (511) einschließt, um einen aus einer Vielzahl von Lastausgleichsnebenrechnern auszuwählen, um eine Kommunikationsverbindung zwischen dem Client und dem ausgewählten, verarbeitenden Servers aufzubauen.

29. Einen Lastausgleicher gemäß einem der Ansprüche 25 bis 28, wobei der Lastausgleichshauptrechner eine Einrichtung zum Anweisen des Clients einschließt, um die Clientanfrage zu dem ausgewählten, verarbeitenden Server umzuleiten, in dem Fall dass der erste Lastausgleichsnebenrechner nicht der ausgewählte Lastausgleichsnebenrechner ist.

30. Einen Lastausgleicher gemäß einem der Ansprüche 25 bis 29, wobei der Lastausgleichshauptrechner eine Einrichtung zum Erzeugen einer Auswahlanweisungsnachricht beinhaltet, die eine Identifikationsinformation einschließt, die den Lastausgleichsnebenrechner identifiziert, und zum Übertragen der Auswahlanweisungsnachricht an den ersten Lastausgleichsnebenrechner, und
der erste Lastausgleichsnebenrechner eine Umleitungseinrichtung (731) zum Erzeugen einer Umleitungsnachricht einschließt, um die Clientanfrage an den ausgewählten Lastausgleichsnebenrechner umzuleiten.

31. Einen Lastausgleicher gemäß einem der Ansprüche 25 bis 30, wobei der Lastausgleicher angepasst ist, eine Auswahl des Lastausgleichsnebenrechners auf mindestens ein (Element) der Gruppe zu gründen, die besteht aus:
einem Standort des Clients,
einem Standort des Lastausgleichsnebenrechners,
einer Identität des Clients, und
einer Verarbeitungslast an einem Lastausgleichnebenrechner, und
einer Anwendung, die durch eine Clientanfragenachricht angefragt wird.

32. Einen Lastausgleicher gemäß einem der Ansprüche 25 bis 31, der eine Einrichtung zum Authentifizieren eines Benutzers an dem Client beinhaltet.

33. Einen Lastausgleicher gemäß einem der Ansprüche 25 bis 32, wobei jeder Lastausgleichsnebenrechner eingerichtet ist, in regelmäßigen Intervallen seine Verarbeitungslast an den Lastausgleichshauptrechner zu melden.

34. Ein Clientdatenverarbeitungsgerät angepasst, um mit dem Lastausgleicher aus einem der Ansprüche 25 bis 33 zu kooperieren, der beinhaltet
eine Einrichtung, um eine Clientanfrage zu erzeugen und um die Clientanfrage zu dem Lastausgleicher zu übertragen; und
eine Clientumleitungseinrichtung (74), um eine Umleitungsnachricht zu empfangen und um eine Clientanfrage an einen Lastausgleichsnebenrechner zu erzeugen, der durch die Umleitungsnachricht spezifiziert ist.

35. Ein Clientdatenverarbeitungsgerät gemäß dem Anspruch 34, wobei die Clientanfrage mindestens eines der Gruppe einschließt, die besteht aus:
einem Clientstandort,
einer Clientidentität, und
einem Identifikator einer angefragten Anwendung.

36. Einen Lastausgleichshauptrechner zum Ausgleichen von Verarbeitungslast in einem Netzwerk, der beinhaltet
eine Lastausgleichsempfangseinrichtung (121) zum Empfangen einer Auswahlanfragenachricht von einem aus einer Vielzahl von Lastausgleichsnebenrechnern (33; 52; 53; 73; 92; 102; 104), wobei die Auswahlanfragenachricht eine Anfrage nach einer Auswahl eines aus einer Vielzahl von verarbeitenden Servern (131, 132, 133, 321, 322, 323, 331, 332, 333) einschließt;
eine Verarbeitungsserverauswahleinrichtung (122) zum Auswählen eines der verarbeitenden Server, um die Clientanfrage zu bedienen; und
ein Anweisungseinrichtung zum Anweisen des Lastausgleichsnebenrechners eine Kommunikationsverbindung (112; 554; 555; 750) zwischen einem Client (11) und dem ausgewählten, verarbeitenden Servers aufzubauen.

37. Einen Lastausgleichshauptrechner gemäß Anspruch 36, wobei die Auswahl des verarbeitenden Servers auf mindestens ein (Element) der Gruppe gründet, die besteht aus:
einem Standort des Clients,
einem Standort des Clients,
einen Standort des verarbeitenden Servers,
einer Identität des Clients,
einer Verarbeitungslast des Servers, und
einer Anwendung, die durch eine Clientanfragenachricht angefragt wird.

38. Einen Lastausgleichshauptrechner gemäß einem der Ansprüche 36 oder 37, der beinhaltet:
eine Anwendungsanweisungseinheit (124) zum Anweisen des ausgewählten, verarbeitenden Servers eine Anwendung, die durch den Client angefragt wird, zu starten,
eine Prozessidentifikationseinrichtung (125) zum Empfangen eines Prozessidentifikators, der die gestartete Anwendung von dem ausgewählten, verarbeitenden Server spezifiziert, und
eine Prozessbenachrichtigungseinrichtung (126) zum Erzeugen einer Benachrichtigungsnachricht, die den Prozessidentifikator beinhaltet, damit der Client den ausgewählten, verarbeitenden Server durch Verwenden des Prozessidentifikators identifiziert.

39. Einen Lastausgleichshauptrechner gemäß einem der Ansprüche 36 bis 38, der eine Nebenrechnerauswahleinrichtung (511) zum Auswählen eines aus einer Vielzahl von Lastausgleichsnebenrechnern beinhaltet, um die Kommunikationsverbindung zwischen dem Client und dem ausgewählten, verarbeitenden Server aufzubauen.

40. Einen Lastausgleichshauptrechner gemäß einem der Ansprüche 36 bis 39, der eine Einrichtung zum Erzeugen einer Auswahlanweisungsnachricht enthält, die eine Identifikationsinformation einschließt, die den ausgewählten Lastausgleichsnebenrechner identifiziert und zum Übertragen der Auswahlanweisungsnachricht an den ersten Lastausgleichsnebenrechner.

41. Ein Lastausgleichshauptrechner gemäß einem der Ansprüche 36 bis 40, wobei der Lastausgleichshauptrechner angepasst ist, eine Auswahl des Lastausgleichsnebenrechners auf mindestens ein (Element) der Gruppe zu gründen, die besteht aus:
einem Standort des Clients,
einem Standort des Lastausgleichsnebenrechners,
einer Identität des Clients, und
einer Verarbeitungslast an einem Lastausgleichnebenrechner, und
einer Anwendung, die durch eine Clientanfragenachricht angefragt wird.

42. Einen Lastausgleichsnebenrechner der angepasst ist, um mit einem Lastausgleichshauptrechner gemäß einem der Ansprüche 36 bis 41 zu kooperieren und der beinhaltet:
eine Nebenrechnerempfangseinrichtung (521; 531) zum Empfangen einer Clientanfrage von einem Client (11),
eine Auswahlanfragenachrichteneinrichtung (522, 532) zum Erzeugen einer Auswahlanfragenachricht zum Anfragen des Lastausgleichshauptrechners, einen aus einer Vielzahl von verarbeitenden Servern (131, 132, 133; 321, 322, 323, 331, 332, 333) zum Bedienen der Clientanfrage auszuwählen, und
eine Nebenrechnerkommunikationseinrichtung (523, 533) zum Aufbauen einer Kommunikationsverbindung (112; 554; 555; 750) zwischen dem Client und dem ausgewählten, verarbeitenden Server.

43. Einen Lastausgleichsnebenrechner gemäß Anspruch 42, der beinhaltet:
eine Einrichtung zum Empfangen einer Auswahlanfragenachricht vom Lastausgleichshauptrechner, die eine Identifikationsinformation einschließt, die den ausgewählten Lastausgleichsnebenrechner identifiziert, und
eine Umleitungseinrichtung (731) zum Erzeugen einer Umleitungsnachricht zum Umleiten der Clientanfrage an den ausgewählten Lastausgleichsnebenrechner.

44. Einen Lastausgleichsnebenrechnergemäß Anspruch 42 oder 43, wobei der Lastausgleichsnebenrechner eingerichtet ist, in regelmäßigen Intervallen seine Verarbeitungslast an den Lastausgleichshauptrechner zu melden.

## Revendications

1. Procédé destiné à équilibrer une charge de traitement dans un réseau comportant une pluralité de serveurs de traitement (131, 132, 133 ; 321, 322, 323, 331, 332, 333) et un moyen d'équilibrage de charge (12 ; 31, 33 ; 51, 52, 53 ; 73), comprenant
la réception d'une requête de client à partir d'un client (11) au niveau du moyen d'équilibrage de charge,
la sélection au niveau du moyen d'équilibrage de charge de l'un de la pluralité de serveurs de traitement afin de prendre en charge la requête du client,
l'établissement d'une liaison de communication (112 554 ; 555 ; 750) entre le client et le serveur de traitement sélectionné par le moyen d'équilibrage de charge, de manière à permettre la prise en charge de la requête du client par le serveur de traitement sélectionné au travers de la liaison de communication,
**caractérisé en ce que**
le moyen d'équilibrage de charge comprend un maître d'équilibrage de charge (31 ; 51 ; 93 ; 103) et une pluralité d'esclaves d'équilibrage de charge (33 ; 52, 53 ; 73 ; 92 ; 102, 104),
la requête du client est reçue au niveau d'un premier esclave d'équilibrage de charge,
un message de requête de sélection est généré au niveau du premier esclave d'équilibrage de charge et transmis du premier esclave d'équilibrage de charge au maître d'équilibrage de charge,
le maître d'équilibrage de charge exécute l'étape de sélection, et
la liaison de communication entre le client et le serveur de traitement sélectionné est établie par l'intermédiaire de l'un des esclaves d'équilibrage de charge.

2. Procédé selon la revendication 1, dans lequel le moyen d'équilibrage de charge base la sélection du serveur de traitement sur au moins une des informations du groupe constitué
d'un emplacement de client,
d'un emplacement de serveur de traitement,
d'une identité de client,
d'une charge de serveur de traitement, et
d'une application demandée avec un message de requête de client.

3. Procédé selon l'une des revendications précédentes, dans lequel la requête du client comprend une requête pour l'exécution d'une application,
le moyen d'équilibrage de charge ordonne au serveur de traitement sélectionné de démarrer l'application demandée,
le serveur de traitement sélectionné retourne un identificateur de processus de l'application démarrée au moyen d'équilibrage de charge, et
le moyen d'équilibrage de charge génère un message d'instruction comprenant l'identificateur de processus afin que le client contacte le serveur de traitement sélectionné en utilisant l'identificateur de processus.

4. Procédé selon l'une des revendications 1 à 3, comprenant la sélection au niveau du maître d'équilibrage de charge d'un esclave de la pluralité d'esclaves d'équilibrage de charge afin d'établir la liaison de communication entre le client et le serveur de traitement sélectionné, et
l'établissement de la liaison de communication par l'intermédiaire de l'esclave d'équilibrage de charge sélectionné.

5. Procédé selon l'une des revendications 1 à 4, comprenant
la génération, au niveau du maître d'équilibrage de charge, d'un message d'instruction de sélection comprenant les informations d'identification identifiant l'esclave d'équilibrage de charge sélectionné,
la transmission du message d'instruction de sélection au premier esclave d'équilibrage de charge,
l'établissement d'une liaison de communication entre le client et le serveur de traitement sélectionné par l'intermédiaire du premier esclave d'équilibrage de charge, dans le cas où les informations d'identification identifient le premier esclave d'équilibrage de charge en tant qu'esclave d'équilibrage de charge sélectionné, et
la génération d'un message de redirection destiné à rediriger la requête du client à l'esclave d'équilibrage de charge sélectionné et à transmettre le message de redirection à l'esclave d'équilibrage de charge sélectionné dans le cas où les informations d'identification n'identifient pas le premier esclave d'équilibrage de charge en tant qu'esclave d'équilibrage de charge sélectionné.

6. Procédé selon la revendication 5, comprenant la transmission du message de redirection du premier esclave d'équilibrage de charge au client afin d'ordonner au client de transmettre la requête du client à l'esclave d'équilibrage de charge sélectionné.

7. Procédé selon la revendication 5 ou 6, comprenant la transmission à partir de l'esclave d'équilibrage de charge sélectionné d'un autre message de requête de sélection au maître d'équilibrage de charge, dans un cas où la requête du client a été redirigée.

8. Procédé selon l'une des revendications 1 à 7, dans lequel la sélection de l'esclave d'équilibrage de charge est basée sur au moins une information du groupe constitué de
un emplacement de client,
un emplacement d'esclave d'équilibrage de charge,
une identité de client, et
une charge de traitement au niveau d'un esclave d'équilibrage de charge, et
une application demandée avec un message de requête de client.

9. Procédé selon l'une des revendications précédentes, dans lequel le moyen d'équilibrage de charge authentifie un utilisateur au niveau du client.

10. Procédé selon l'une des revendications 1 à 9, dans lequel chaque serveur de traitement et esclave d'équilibrage de charge communiquent, à intervalles réguliers, sa charge de traitement au maître d'équilibrage de charge.

11. Support lisible par un ordinateur, comprenant un programme enregistré sur celui-ci, où le programme est destiné à amener l'ordinateur à exécuter le procédé selon l'une des revendications 1 à 10.

12. Produit de programme informatique comprenant le support lisible par un ordinateur selon la revendication 11.

13. Procédé destiné à équilibrer une charge de traitement dans un réseau comportant une pluralité de serveurs de traitement (131, 132, 133 ; 321, 322, 323, 331, 332, 333) et un moyen d'équilibrage de charge (12 ; 31, 33 ; 51, 52, 53 ; 73), comprenant
la réception d'une requête de client à partir d'un client (11) au niveau du moyen d'équilibrage de charge,
la sélection au niveau du moyen d'équilibrage de charge de l'un de la pluralité de serveurs de traitement destiné à prendre en charge 1a requête du client,
l'autorisation d'établir une liaison de communication (112 ; 554 ; 555 ; 750) entre le client et le serveur de traitement sélectionné par le moyen d'équilibrage de charge, de manière à permettre la prise en charge de la requête du client par le serveur de traitement sélectionné par l'intermédiaire de la liaison de communication,
**caractérisé en ce que**
le moyen d'équilibrage de charge comprend un maître d'équilibrage de charge (31 ; 51 ; 93 ; 103) destiné à communiquer avec une pluralité d'esclaves d'équilibrage de charge (33 ; 52, 53 ; 73 ; 92 ; 102, 104),
le maître d'équilibrage de charge reçoit un message de requête de sélection d'un premier esclave d'équilibrage de charge basé sur la requête du client, et
le maître d'équilibrage de charge exécute l'étape de sélection.

14. Procédé selon la revendication 13, dans lequel le maître d'équilibrage de charge base la sélection du serveur de traitement sur au moins une des informations du groupe constitué de
un emplacement de client,
un emplacement de serveur de traitement,
une identité de client,
une charge de serveur de traitement, et
une application demandée avec un message de requête de client.

15. Procédé selon l'une des revendications 13 ou 14, dans lequel le maître d'équilibrage de charge ordonne au serveur de traitement sélectionné de démarrer une application demandée avec la requête du client,
le maître d'équilibrage de charge reçoit un identificateur de processus de l'application démarrée du serveur de traitement sélectionné, et
le maître d'équilibrage de charge génère un message d'instruction comprenant l'identificateur de processus afin que le client contacte le serveur de traitement sélectionné en utilisant l'identificateur de processus.

16. Procédé selon l'une des revendications 13 à 15, comprenant les étapes consistant à :
sélectionner au niveau du maître d'équilibrage de charge l'un d'une pluralité d'esclaves d'équilibrage de charge afin d'établir la liaison de communication entre le client et le serveur de traitement sélectionné, et
permettre à l'esclave d'équilibrage de charge sélectionné d'établir la liaison de communication.

17. Procédé selon l'une des revendications 13 à 16, comprenant les étapes consistant à
générer au niveau du maître d'équilibrage de charge un message d'instruction de sélection comprenant des informations d'identificateur identifiant l'esclave d'équilibrage de charge sélectionné,
transmettre le message d'instruction sélectionné au premier esclave d'équilibrage de charge,
permettre au premier esclave d'équilibrage de charge d'établir la liaison de communication entre le client et le serveur de traitement sélectionné, dans le cas où les informations d'identification identifient le premier esclave d'équilibrage de charge en tant qu'esclave d'équilibrage de charge, et
générer un message de redirection destiné à rediriger la requête du client vers l'esclave d'équilibrage de charge sélectionné et à transmettre le message de redirection à l'esclave d'équilibrage de charge sélectionné dans le cas où les informations d'identification n'identifient pas le premier esclave d'équilibrage de charge en tant qu'esclave d'équilibrage de charge sélectionné.

18. Procédé selon la revendication 17, comprenant le fait d'ordonner au premier esclave d'équilibrage de charge de transmettre le message de redirection au client afin d'ordonner au client de transmettre la requête du client à l'esclave d'équilibrage de charge sélectionné.

19. Procédé selon la revendication 17 ou 18, comprenant la réception à partir de l'esclave d'équilibrage de charge sélectionné d'un autre message de requête de sélection, dans le cas où la requête du client a été redirigée.

20. Procédé selon l'une des revendications 13 à 19, dans lequel la sélection de l'esclave d'équilibrage de charge est basée sur au moins une des informations du groupe constitué de
un emplacement de client,
un emplacement d'esclave d'équilibrage de charge,
une identité de client, et
une charge de traitement au niveau d'un esclave d'équilibrage de charge et
une application demandée avec un message de requête de client.

21. Procédé selon l'une des revendications 13 à 20, dans lequel le moyen d'équilibrage de charge authentifie un utilisateur au niveau du client.

22. Procédé selon l'une des revendications 13 à 21, dans lequel chaque serveur de traitement et esclave d'équilibrage de charge communiquent, à intervalles réguliers, sa charge de traitement au maître d'équilibrage de charge.

23. Support lisible par un ordinateur, comprenant un programme enregistré sur celui-ci, où le programme est destiné à amener l'ordinateur à exécuter le procédé selon l'une des revendications 13 à 22.

24. Produit de programme informatique comprenant le support lisible par un ordinateur selon la revendication 23.

25. Dispositif d'équilibrage de charge destiné à équilibrer une charge de traitement dans un réseau, comprenant
un moyen de réception de dispositif d'équilibrage de charge (121) destiné à recevoir une requête de client à partir d'un client (11),
un moyen de sélection de serveur de traitement (122) destiné à sélectionner l'un d'une pluralité de serveurs de traitement (131, 132, 133 ; 321, 322, 323, 331, 332, 333) afin de prendre en charge la requête du client, et
un moyen de communication de dispositif d'équilibrage de charge (123) destiné à établir une liaison de communication (112 ; 554 ; 555 ; 750) entre le client (11) et le serveur de traitement sélectionné,
**caractérisé en ce que**
le dispositif d'équilibrage de charge comprend une pluralité d'esclaves d'équilibrage de charge (33 ; 52, 53 ; 73 ; 92 ; 102, 104) et un maître d'équilibrage de charge (31 ; 51 ; 93 ; 103), dans lequel
chaque esclave de la pluralité d'esclaves d'équilibrage de charge comprend
un moyen de réception esclave (521, 531),
un moyen de message de requête de sélection (522, 532) destiné à générer un message de requête de sélection et à transmettre le message de requête de sélection au maître d'équilibrage de charge,
un moyen de communication esclave (523, 533) destiné à établir une liaison de communication entre le client et le serveur de traitement sélectionné, et
le maître d'équilibrage de charge comprend le moyen de sélection de serveur de traitement (122).

26. Dispositif d'équilibrage de charge selon la revendication 25, dans lequel le dispositif d'équilibrage de charge est conçu pour baser la sélection du serveur de traitement sur au moins une des informations du groupe constitué de
un emplacement de client,
un emplacement de serveur de traitement,
une identité de client,
une charge de serveur de traitement, et
une application demandée avec un message de requête de client.

27. Dispositif d'équilibrage de charge selon la revendication 25 ou 26, dans lequel le moyen d'équilibrage de charge comprend
un moyen d'instruction d'application (124) destiné à ordonner au serveur de traitement sélectionné de lancer une application demandée par le client,
un moyen d'identification de processus (125) destiné à recevoir un identificateur de processus spécifiant l'application démarrée à partir du serveur de traitement sélectionné, et
un moyen de notification de processus (126) destiné à générer un message de notification comprenant l'identificateur de processus afin que le client contacte le serveur de traitement sélectionné en utilisant l'identificateur de processus.

28. Dispositif d'équilibrage de charge selon l'une des revendications 25 à 27, dans lequel le maître d'équilibrage de charge comprend un moyen de sélection d'esclave (511) destiné à sélectionner un esclave de la pluralité d'esclaves d'équilibrage de charge afin d'établir la liaison de communication entre le client et le serveur de traitement sélectionné.

29. Dispositif d'équilibrage de charge selon l'une des revendications 25 à 28, dans lequel le maître d'équilibrage de charge comprend un moyen destiné à ordonner au client de rediriger la requête du client vers l'esclave d'équilibrage de charge sélectionné, dans le cas où le premier esclave d'équilibrage de charge n'est pas l'esclave d'équilibrage de charge sélectionné.

30. Dispositif d'équilibrage de charge selon l'une des revendications 25 à 29, dans lequel
le maître d'équilibrage de charge comprend un moyen destiné à générer un message d'instruction de sélection comprenant des informations d'identification identifiant l'esclave d'équilibrage de charge sélectionné et destiné à transmettre le message d'instruction de sélection au premier esclave d'équilibrage de charge, et
le premier esclave d'équilibrage de charge comprend un moyen de redirection (731) destiné à générer un message de redirection afin de rediriger la requête du client vers l'esclave d'équilibrage de charge sélectionné.

31. Dispositif d'équilibrage de charge selon l'une des revendications 25 à 30, dans lequel le dispositif d'équilibrage de charge est conçu pour baser une sélection de l'esclave d'équilibrage de charge sur au moins une des informations du groupe constitué de
un emplacement de client,
un emplacement esclave d'équilibrage de charge,
une identité de client, et
une charge de traitement au niveau d'un esclave d'équilibrage de charge, et
une application demandée avec un message de requête de client.

32. Dispositif d'équilibrage de charge selon l'une des revendications 25 à 31, comprenant un moyen destiné à authentifier un utilisateur au niveau du client (11).

33. Dispositif d'équilibrage de charge selon l'une des revendications 25 à 32, dans lequel chaque esclave d'équilibrage de charge est agencé pour communiquer, à intervalles réguliers, sa charge de traitement au maître d'équilibrage de charge.

34. Dispositif de traitement de données de client conçu pour coopérer avec le dispositif d'équilibrage de charge selon l'une des revendications 25 à 33, comprenant
un moyen destiné à générer une requête de client et à transmettre la requête de client au dispositif d'équilibrage de charge, et
un moyen de redirection de client (74) afin de recevoir un message de redirection et générer une requête de client vers un esclave d'équilibrage de charge spécifié par le message de redirection.

35. Dispositif de traitement de données de client selon la revendication 34, dans lequel la requête du client comprend au moins une des informations du groupe constitué de
un emplacement de client,
une identité de client, et
un identificateur d'une application demandée.

36. Maître d'équilibrage de charge destiné à équilibrer une charge de traitement dans un réseau, comprenant
un moyen de réception de dispositif d'équilibrage de charge (121) destiné à recevoir un message de requête de sélection à partir d'un esclave d'une pluralité d'esclaves d'équilibrage de charge (33 ; 52, 53 ; 73 ; 92 ; 102, 104), le message de requête de sélection comprenant une requête en vue d'une sélection d'un serveur de la pluralité de serveurs de traitement (131, 132, 133 ; 321, 322, 323, 331, 332, 333),
un moyen de sélection de serveur de traitement (122) destiné à sélectionner l'un desdits serveurs de traitement afin de prendre en charge la requête du client, et
un moyen d'instruction destiné à ordonner à l'esclave d'équilibrage de charge d'établir une liaison de communication (112 ; 554 ; 555, 750) entre un client (11) et le serveur de traitement sélectionné.

37. Maître d'équilibrage de charge conforme à la revendication 36, dans lequel la sélection du serveur de traitement est basée sur au moins l'une des informations du groupe constitué de
un emplacement de client,
un emplacement de serveur de traitement,
une identité de client,
une charge de serveur de traitement, et
une application demandée avec un message de requête de client.

38. Maître d'équilibrage de charge selon l'une des revendications 36 ou 37, comprenant
un moyen d'instruction d'application (124) destiné à ordonner au serveur de traitement sélectionné de lancer une application demandée par le client,
un moyen d'identification de processus (125) destiné à recevoir un identificateur de processus spécifiant l'application démarrée à partir du serveur de traitement sélectionné, et
un moyen de notification de processus (126) destiné à générer un message de notification comprenant l'identificateur de processus afin que le client contacte le serveur de traitement sélectionné en utilisant l'identificateur de processus.

39. Maître d'équilibrage de charge selon l'une des revendications 36 à 38, comprenant un moyen de sélection d'esclave (511) destiné à sélectionner un esclave de la pluralité d'esclaves d'équilibrage de charge afin d'établir la liaison de communication entre le client et le serveur de traitement sélectionné.

40. Maître d'équilibrage de charge selon l'une des revendications 36 à 39 comprenant un moyen destiné à générer un message d'instruction de sélection comprenant des informations d'identification identifiant l'esclave d'équilibrage de charge sélectionné et destiné à transmettre le message d'instruction de sélection au premier esclave d'équilibrage de charge.

41. Maître d'équilibrage de charge selon l'une des revendications 36 à 40, dans lequel le maître d'équilibrage de charge est conçu pour baser une sélection de l'esclave d'équilibrage de charge sur au moins une des informations du groupe constitué de
un emplacement de client,
un emplacement d'esclave d'équilibrage de charge,
une identité de client, et
une charge de traitement au niveau d'un esclave d'équilibrage de charge, et
une application demandée avec un message de requête de client.

42. Esclave d'équilibrage de charge conçu pour coopérer avec le maître d'équilibrage de charge selon l'une des revendications 36 à 41, comprenant
un moyen de réception esclave (521 ; 531) destiné à recevoir une requête de client à partir d'un client (11),
un moyen de message de requête de sélection (522, 532) destiné à générer un message de requête de sélection afin de demander au maître d'équilibrage de charge de sélectionner un serveur d'une pluralité de serveurs de traitement (131, 132, 133 ; 321, 322, 323, 331, 332, 333) destiné à prendre en charge la requête du client, et
un moyen de communication esclave (523 ; 533) destiné à établir une liaison de communication (112 ; 554 ; 555 ; 750) entre le client (11) et le serveur de traitement sélectionné.

43. Esclave d'équilibrage de charge selon la revendication 42, comprenant
un moyen destiné à recevoir du maître d'équilibrage de charge un message d'instruction de sélection comprenant des informations d'identification identifiant l'esclave d'équilibrage de charge sélectionné, et
un moyen de redirection (731) destiné à générer un message de redirection afin de rediriger la requête du client vers l'esclave d'équilibrage de charge sélectionné.

44. Esclave d'équilibrage de charge selon l'une des revendications 42 ou 43, dans lequel l'esclave d'équilibrage de charge est agencé pour communiquer, à intervalles réguliers, sa charge de traitement au maître d'équilibrage de charge.
